(19) Europäisches Patentamt
European Patent Office
Office européen des brevets

(11) **EP 4 398 660 A1**

(12) **EUROPEAN PATENT APPLICATION**
published in accordance with Art. 153(4) EPC

(43) Date of publication:
**10.07.2024 Bulletin 2024/28**

(21) Application number: **22863514.0**

(22) Date of filing: **31.08.2022**

(51) International Patent Classification (IPC):
**H04W 64/00** (2009.01)  **H04W 76/14** (2018.01)
**H04L 5/00** (2006.01)

(52) Cooperative Patent Classification (CPC):
**H04L 5/00; H04W 64/00; H04W 76/14**

(86) International application number:
**PCT/CN2022/116158**

(87) International publication number:
**WO 2023/030379 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 CN 202111034474**

(71) Applicant: **ZTE Corporation**
**Shenzhen, Guangdong 518057 (CN)**

(72) Inventors:
• **ZHANG, Shujuan**
  **Shenzhen, Guangdong 518057 (CN)**
• **LU, Zhaohua**
  **Shenzhen, Guangdong 518057 (CN)**
• **JIANG, Chuangxin**
  **Shenzhen, Guangdong 518057 (CN)**
• **ZHENG, Guozeng**
  **Shenzhen, Guangdong 518057 (CN)**
• **PAN, Yu**
  **Shenzhen, Guangdong 518057 (CN)**
• **CHEN, Jie**
  **Shenzhen, Guangdong 518057 (CN)**

(74) Representative: **Vossius & Partner**
**Patentanwälte Rechtsanwälte mbB**
**Siebertstraße 3**
**81675 München (DE)**

(54) **POSITIONING REFERENCE SIGNAL TRANSMISSION METHOD AND APPARATUS FOR COMMUNICATION NODE, NODE, AND MEDIUM**

(57) The present application discloses a method, an apparatus, a node, and storage medium for communicating a positioning reference signal of a communication node, the method comprising: determining a positioning reference signal PRS region by a first communication node; communicating a PRS signal in the PRS region by the first communication node; wherein the communicating comprises transmitting and/or receiving.

FIG.3

EP 4 398 660 A1

## Description

### FIELD

The present application relates to the field of wireless communication technology, and particularly to a method, an apparatus, a node, and a storage medium for communicating a positioning reference signal of a communication node.

### BACKGROUND

Sidelink is a communication link between a user equipment (UE) and a UE, which is characterized by short transmission distance and low power consumption, and more accurate positioning information of the UE can be obtained by measuring a positioning information through the sidelink, but there is no relevant implementation at present.

### SUMMARY

The main object of embodiments of the present application is to propose a method, an apparatus, a node, and a storage medium for communicating a positioning reference signal of a communication node, aiming at realizing accurate measurement of positioning information of the communication node.

Embodiments of the present application provide a method for communicating a positioning reference signal of a communication node, including: determining a positioning reference signal PRS region by a first communication node; communicating a PRS signal in the PRS region by the first communication node; where the communicating includes transmitting and/or receiving.

Embodiments of the present application provide a method for communicating a positioning reference signal of a communication node, including: determining a structure of positioning reference signal PRS selection units by a first communication node; determining one or more PRS selection units by the first communication node; performing at least one of the following operations by the first communication node: communicating a PRS signal on the determined one or more PRS selection units, communicating a twelfth signaling information; the twelfth signaling information includes information of the determined one or more PRS selection units; where the communicating includes transmitting and/or receiving.

Embodiments of the present application provide an apparatus for communicating a positioning reference signal of a communication node, including: a determining module for determining a positioning reference signal PRS region; a communicating module for communicating a PRS signal in the PRS region; where the communicating includes transmitting and/or receiving.

Embodiments of the present application provide an apparatus for communicating a positioning reference signal of a communication node, including: a determining module and a communicating module, the communicating module including a first communicating unit and a second communicating unit; the determining module is used for determining a structure of PRS selection units; the determining module is further used for determining one or more PRS selection units; the first communicating unit is used for configuring for communicating a PRS signal on the determined one or more PRS selection units, and/or, the second communicating unit is used for transmitting a twelfth signaling information; the twelfth signaling information includes information of the determined one or more PRS selection units, where the communicating includes transmitting and/or receiving.

Embodiments of the present application provide a communication node including: a processor, which when executing computer program, the processor implements the method of communicating the positioning signal of the communication node as provided by embodiments of the present application.

Embodiments of the present application provide a readable and writable storage medium, the readable and writable storage medium has computer program stored thereon, which when executed by a processor, the computer program implements the method of communicating the positioning signal of the communication node as provided in embodiments of the present application.

Embodiments of the present application provide a method, an apparatus, a node, and a storage medium for communicating a positioning reference signal of a communication node, the method including: determining a positioning measurement reference signal PRS region by a first communication node; communicating a PRS signal in the PRS region by the first communication node; where the communicating includes transmitting and/or receiving. Based on this method, accurate measurement of positioning information of a communication node can be realized.

## BRIEF DESCRIPTION OF THE DRAWINGS

FIG. 1 is a flowchart of a method for communicating a positioning reference signal of a communication node provided by embodiments of the present application.

FIG. 2 is a schematic diagram of a configuration of a sidelink in a related art provided by embodiments of the present application.

FIG. 3 is a schematic diagram of a PRS region and a data region that may correspond to different carrier frequency configuration structures, respectively, provided by embodiments of the present application.

FIG. 4 is a schematic diagram of frequency for data and frequency for PRS located at different frequency-domain locations as provided by embodiments of the present application.

FIG. 5 is a schematic diagram of a bandwidth corresponding to frequency for data that is a subset of a corresponding bandwidth of frequency for PRS provided by embodiments of the present application.

FIG. 6 is a schematic diagram of a PRS region and a data region corresponding to BWP configuration structures of different bandwidth parts within a carrier frequency configuration structure, respectively, provided by embodiments of the present application.

FIG. 7 is a schematic diagram of a BWP corresponding to a PRS region and a BWP corresponding to a data region within a bandwidth corresponding to a carrier frequency in the time-domain, but a portion of the bandwidth can only be occupied by the PRS region, provided by embodiments of the present application.

FIG. 8 is a schematic diagram of a PRS region and a data region corresponding to different resource pools in a BWP configuration structure, respectively, provided by embodiments of the present application.

FIG. 9 is a schematic diagram of the PRS region and the data region corresponding to different configuration parameters in a resource pool, respectively, provided by embodiments of the present application.

FIG. 10 is a schematic diagram of a slot structure of slots where the PRS region is located, provided by embodiments of the present application.

FIG. 11 is another schematic diagram of a slot structure of slots where the PRS region is located when the transmission bandwidths of the slots corresponding to the PRS region and the data region respectively are different, provided by embodiments of the present application.

FIG. 12 is a schematic diagram of L PRS slots existing with equal intervals provided by embodiments of the present application.

FIG. 13 is a schematic diagram of L PRS slots containing X second time units and Y second time units provided by embodiments of the present application.

FIG. 14 is a schematic diagram of candidate PRS resources in a PRS region in a candidate resource window provided by embodiments of the present application.

FIG. 15 is a schematic diagram of a slot containing time-domain symbols corresponding to a PRS region and time-domain symbols corresponding to a data region provided by embodiments of the present application.

FIG. 16 is a schematic diagram of another slot containing time-domain symbols corresponding to a PRS region and time-domain symbols corresponding to a data region provided by embodiments of the present application.

FIG. 17 is a schematic diagram of yet another slot containing time-domain symbols corresponding to a PRS region and time-domain symbols corresponding to a data region provided by embodiments of the present application.

FIG. 18 is a schematic diagram of a slot structure diagram of a slot including a data region and a PRS region provided by embodiments of the present application.

FIG. 19 is a schematic diagram of another slot structure diagram of a slot including a data region and a PRS region provided by embodiments of the present application.

FIG. 20 is a schematic diagram of yet another slot structure diagram of a slot including a data region and a PRS region provided by embodiments of the present application.

FIG. 21 is a schematic diagram of further slot structure diagram of a slot including a data region and a PRS region provided by embodiments of the present application.

FIG. 22 is a schematic diagram of additional slot structure diagram of a slot including a data region and a PRS region provided by embodiments of the present application.

FIG. 23 is a schematic diagram of a slot structure of a slot including PRS time-domain symbols and feedback channel time-domain symbols provided by embodiments of the present application.

FIG. 24 is a schematic diagram of a slot structure of a slot including a control channel region, a PRS region, and a feedback channel region provided by embodiments of the present application.

FIG. 25 is a schematic diagram of another slot structure of a slot including a control channel region, a PRS region, and a feedback channel region provided by embodiments of the present application.

FIG. 26 is a schematic diagram of a slot structure of a slot including a control channel region and a PRS region provided by embodiments of the present application.

FIG. 27 is a schematic diagram of another slot structure of a slot including a control channel region and a PRS region provided by embodiments of the present application.

FIG. 28 is a schematic diagram of a slot structure of a slot including only PRS time-domain symbols provided by embodiments of the present application.

FIG. 29 is a schematic diagram of a slot in which each second PRS unit includes P time-domain symbols provided by embodiments of the present application, the first time-domain symbol of each second PRS unit being an AGC time-domain symbol.

FIG. 30 is a schematic diagram of another slot in which each second PRS unit includes P time-domain symbols provided by embodiments of the present application, the first time-domain symbol of each second PRS unit being an AGC time-domain symbol.

FIG. 31 is a schematic diagram of each second PRS unit in a slot including K time-domain symbols provided by embodiments of the present application, the first time-domain symbol of each second PRS unit being an AGC time-domain symbol, and the number of time-domain symbols or the PRS pattern corresponding to different second PRS units being different.

FIG. 32 is a flowchart of another method for transmitting a positioning reference signal of a communication node provided by embodiments of the present application.

FIG. 33 is a schematic diagram of a structure of an apparatus for transmitting a positioning reference signal of a communication node provided by embodiments of the present application.

FIG. 34 is a schematic diagram of a structure of another apparatus for transmitting a positioning reference signal of a communication node provided by embodiments of the present application.

FIG. 35 is a schematic diagram of a structure of a communication node provided by embodiments of the present application.

## DETAILED DESCRIPTION OF EMBODIMENTS

In order to make objects, technical solutions and advantages of the present application clearer and more understandable, embodiments of the present application will be described in detail in the following in connection with the accompanying drawings. It is to be noted that embodiments and features in the embodiments in the present application may be combined with each other in any combination without conflict.

Furthermore, in embodiments of the present application, the words "optionally" or "exemplarily", etc., are used to represent an example, an illustration, or a description. Any embodiment or design solution described as "optionally" or "exemplarily" in the embodiments of the present application should not be construed as being preferred or more advantage over other embodiments or design solutions. Rather, the use of the words "optionally" or "exemplarily", etc., is intended to present the relevant concepts in a specific manner.

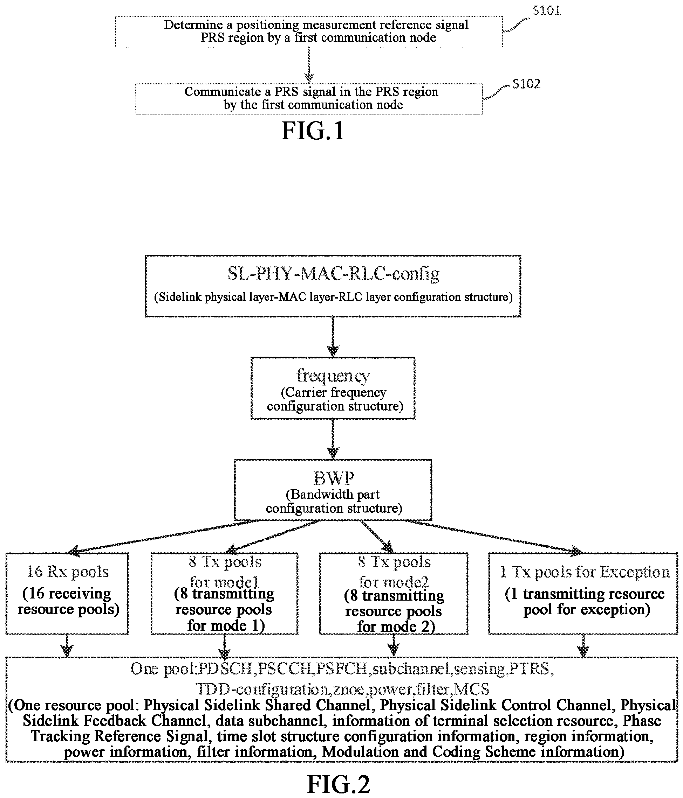

FIG. 1 shows a flowchart of a method for communicating a positioning reference signal of a communication node provided by embodiments of the present application, which may be applied in a communication link scenario between two communication nodes, which may include a communication link between a terminal and another terminal with scheduling capability or between a terminal and a base station. Furthermore, the communication link may include a Sidelink link. As shown in FIG. 1, the method may include, but is not limited to, the following:

S101, a first communication node determines a positioning reference signal PRS region.

In embodiments of the present application, the first communication node may be understood as a communication node (or terminal) at the other end of the communication with the above base station or the terminal with scheduling capability.

For example, an implementation of determining the PRS region in S101 may include at least one of the following:

The first communication node receives a first signaling information transmitted by a second communication node, determines the PRS region based on the first signaling information, and the second communication node may be a base station or another terminal node in the Sidelink link in communication with the first communication node. For example, the first communication node communicates with the second communication node on the communicated Sidelink link, the second communication node transmits a signal, and the first communication node receives a signal transmitted by the second communication node.

The first communication node determines the PRS region and transmits a second signaling information to a third communication node, where the second signaling information carries parameters of the determined PRS region. Optionally, the third communication node in embodiments of the present application may be another terminal node in a Sidelink link in communication with the first communication node, e.g., a receiving node that receives a signal transmitted by the first communication node. Optionally, the signal in the embodiments of the present application may include a channel signal, a reference signal, and the like.

The first communication node determines the PRS region based on predetermined parameters.

The above first signaling information, the second signaling information may include MAC CE, RRC, physical layer dynamic control signaling, such as PSCCH (Physical Sidelink control channel) and other information. Similarly, a third signaling information, a fourth signaling information to a fourteenth signaling information, or other signaling information, such as parameter signaling information, etc., which are involved below, may further include MAC CE, RRC, physical layer dynamic control signaling, such as PSCCH (Physical Sidelink control channel) and other information, i.e., different signaling information such as the first signaling information, the second signaling information and so on in the embodiments of the present application are only used to differentiate between objects or scenarios communicated with the first communication node and do not restrict the signaling information to be different.

S102, the first communication node communicates a PRS signal in the PRS region.

The communicating includes transmitting and/or receiving.

In one example, for example, the above first signaling information or second signaling information or predetermined parameters include at least one of the following parameters corresponding to the PRS region: a PRS signal period, a set of time-domain symbols corresponding to the PRS in a time slot (slot), a number of first time units L included in a first PRS unit, an interval between two consecutive first PRS units in a PRS signal period, a number of first PRS units included in a PRS signal period, X second time units at a start position of a first PRS unit, Y second time units at an end position of a first PRS unit, a number of second PRS units included in a first PRS unit, a set of physical resource blocks PRBs corresponding to the PRS region, a set of slots corresponding to the PRS region, a location of a second PRS unit in a slot, a number of second PRS units in a slot, parameters of a PRS selection unit, PRS signal resource list, and parameters of a control channel, where the control channel is associated with the PRS region. For example, the control channel is in the PRS region, or the control channel is in the slot where the PRS is located, or the control channel schedules the PRS signal. Optionally, the parameters of the control channel associated with the PRS region and the parameters of the control channel associated with the data region are independent, are determined respectively, and may be different. The parameters of the control channel include a number of information bits included in the control channel, a number of time-domain symbols occupied by the control channel, a number of PRBs occupied by the control channel, and the control channel includes a Sidelink control channel, and/or a Sidelink feedback channel.

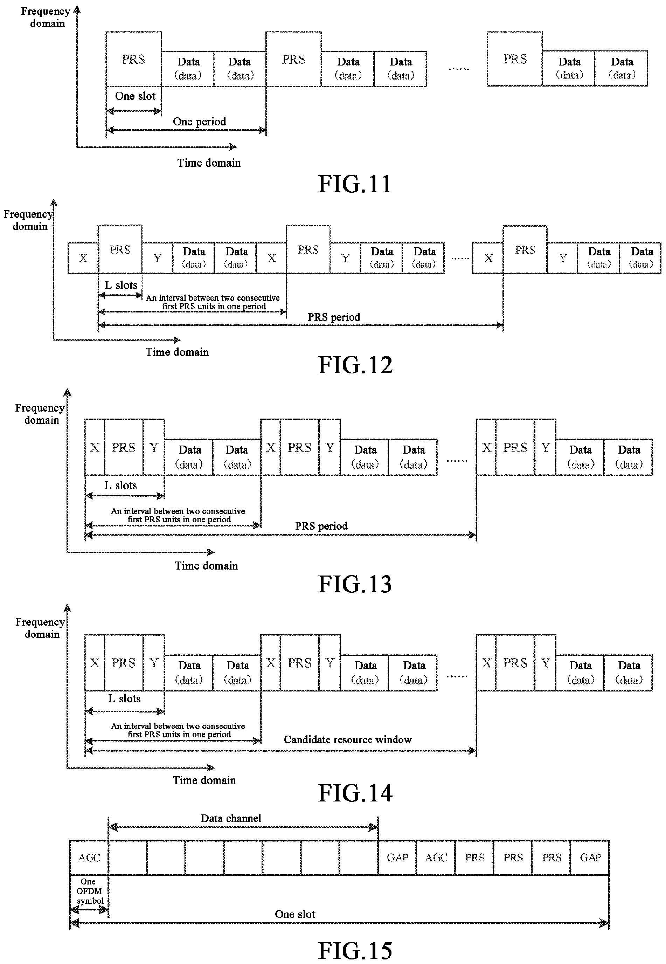

The above X second time units at the start position of a first PRS unit and Y second time units at the end position of a first PRS unit may be understood as X second time units and Y second time units contained in the first PRS unit, as shown in FIG. 13, or understood as X second time units and Y second time units contained outside the first PRS unit, as shown in FIG. 12.

For example, the above second time unit satisfies at least one of the following features that: the first communication node does not communicate a signal in the second time unit; the first communication node performs RF parameter adjustment in the second time unit, for example, adjusting the RF bandwidth; the first communication node determines whether to communicate a signal in the second time unit based on a third signaling information or a preset rule; the second time unit and the first PRS unit are located at different time-domain locations, the first PRS unit includes the second time unit.

Optionally, X and/or Y may be obtained based on at least one of the following information: a relationship between a bandwidth of a data region and a bandwidth of the PRS region; a relationship between a center carrier frequency of a data region and a center carrier frequency of the PRS region; a relationship between a subcarrier spacing of a data region and a subcarrier spacing of the PRS region; capability information of the first communication node; capability information of the third communication node, where the third communication node is a node that receives a signal transmitted by the first communication node; the received fourth signaling information transmitted by the second communication node.

In one example, the above first time unit and/or the second time unit include one of the following: a slot, an Orthogonal Frequency Division Multiplexing (OFDM) time-domain symbol.

Optionally, the PRS region in the above S101 includes at least one of the following: the PRS region including one or more second PRS units; the PRS region including one or more slots; the PRS region including one or more time-domain symbols in a slot.

In one example, the first communication node communicating the PRS signal in the PRS region in the above S 102 may include at least one of the following: the first communication node communicating a PRS signal in one or more PRS selection units in the PRS region; the first communication node detecting a PRS signal in each PRS selection unit of the PRS region; the first communication node selecting, among a plurality of PRS selection units in the PRS region, one or more PRS selection units, and transmitting a PRS signal in the selected PRS selection units; the first communication node determining, among a set of candidate PRS selection units in the PRS region, one or more PRS selection units, and transmitting a fifth signaling information on the determined PRS selection units, where the fifth signaling information includes information of the one or more PRS selection units determined by the first communication node, and the determined one or more PRS selection units include a PRS selection unit for communicating a PRS signal and/or reserved PRS selection units for communicating the PRS signal; the first communication node transmitting the PRS signal only in one or more resources in the PRS region; the first communication node determining available PRS selection units among a set of candidate PRS selection units in the PRS region, determining one or more PRS selection units among the determined available PRS selection units, and transmitting a sixth signaling information of the determined PRS selection unit, the sixth signaling information includes information of the determined one or more PRS selection units, and the determined one or more PRS selection units include PRS selection units for transmitting the PRS signal and/or a reserved PRS selection unit; the first communication node determining available PRS selection units among a set of candidate PRS selection units in the PRS region, and determining one or more PRS selection units among the determined available PRS selection units, and transmitting the PRS signal in the determined PRS selection units.

In one example, the first communication node determining the PRS region in the above S101 may include at least one of the following: the first communication node determining that the PRS region and a data region are regions independent of each other; the first communication node determining that the PRS region does not include resources corresponding to the data region; the first communication node determining that the data region does not include resources corresponding to the PRS region; the first communication node determining that a frequency-domain bandwidth corresponding to the PRS region is greater than a frequency-domain bandwidth corresponding to the data region; the first communication node determining that there is a gap between the PRS region and the data region, where the gap includes a time-domain gap and a frequency-domain gap, and the first communication node does not transmit a PRS signal in the gap; the first communication node determining that the frequency-domain bandwidth corresponding to the PRS region is an integer multiple of the frequency-domain bandwidth corresponding to the data region, e.g., the number of PRBs included in the PRS region is an integer multiple of the number of PRBs included in the data region; the first communication node determining resources available for communicating data based on resources corresponding to the PRS region; the first communication node determining resources available for communicating the PRS signal based on resources corresponding to the data region.

The PRS region and the data region being independent of each other includes one of the following that: the PRS region and the data region correspond to different slots respectively; the PRS region and the data region correspond to different time-domain symbols of a slot respectively; the PRS region and the data region correspond to different frequency-domain resources respectively; and the PRS region and the data region correspond to different frequency-domain resource blocks PRBs respectively.

Furthermore, the first communication node may determine resources available for transmitting data in a set of candidate resources based on the PRS region; the first communication node selects one or more resources among the determined resources for transmitting data; and the first communication node transmits a data channel on the selected resources and/or transmits a seventh signaling information, where the seventh signaling information includes information of the selected one or more resources.

In one example, the above first communication node may further communicate by at least one of the following: the first communication node communicating data and/or control channel in the data region; the first communication node not communicating data in the PRS region; the first communication node not communicating a PRS signal in the data region; the first communication node communicating the PRS signal and/or the control channel in the PRS region.

Optionally, the first communication node may determine resources available for transmitting the PRS signal in the set of candidate resources based on the data region; the first communication node selects one or more resources in the determined resources for transmitting the PRS signal; the first communication node transmits the PRS on the selected resource and/or transmits an eighth signaling information, where the eighth signaling information includes information of the selected resource.

Furthermore, the PRS region and the data region being independent of each other further includes at least one of the following that: the PRS region and the data region correspond to different carrier frequency configuration structures respectively; the PRS region and the data region correspond to different BWP configuration structures within a carrier frequency configuration structure respectively; the PRS region and the data region correspond to different resource pools in a BWP configuration structure respectively; the PRS region and the data region correspond to different configuration parameters in a resource pool respectively; predetermined conditions need to be satisfied between a parameter corresponding to the PRS region and a parameter corresponding to the data region, e.g., the subcarrier spacings of the PRS region and the data region are the same, and/or, the bandwidths of the PRS region and the data region satisfy predetermined conditions, etc.

The data region in the embodiments of the present application corresponds to data selection units, the PRS region corresponds to PRS selection units, and the data selection units and the PRS selection units have different structures.

Furthermore, the PRB and the slot may further satisfy at least one of the following conditions: a PRB corresponds to a data selection unit on the same time-domain symbol; a PRB corresponds to one or more PRS selection units on the same time-domain symbol; a slot corresponds to a data selection unit in time-domain; a slot corresponds to one or more PRS selection units in time-domain; data selection units in a slot are frequency division multiplexed; PRS selection units in a slot are time division multiplexed and/or frequency division multiplexed; a data selection unit includes all subcarriers in each of H PRBs, where H is a positive integer greater than or equal to 1; a PRS selection unit includes a portion of subcarriers in each of B PRBs, where B is a positive integer greater than or equal to 1; signals in a data channel being are communicated in one or more data selection units; a PRS signal is communicated in one or more PRS selection units; a data selection unit includes D PRS selection units, where D is a positive integer greater than or equal to 1; there is a multiple relationship between frequency-domain resources corresponding to a data selection unit and frequency-domain resource corresponding to a PRS selection unit; there is a multiple relationship between time-domain resources corresponding to a data selection unit and time-domain resources corresponding to a PRS selection unit; a number of time-domain symbols corresponding to a data selection unit is equal to a number of time-domain symbols corresponding to G PRS selection units, where the number of time-domain symbols corresponding to different PRS selection units among the G PRS selection units are the same or different, where G is a positive integer greater than 1; based on parameter signaling information, parameters of the PRS selection unit and parameters of the data selection unit are determined respectively; the data selection unit is a basic scheduling unit for communicating data; and the PRS selection unit is a basic scheduling unit for communicating PRS, where the data selection unit is also referred as a sub-channel, and the PRS selection unit is also referred as a PRS sub-channel.

The above multiple relationship may be understood as one of the frequency-domain resources being an integer multiple of another frequency-domain resource, such as the number of PRBs corresponding to a PRS selection unit being an integer multiple of the number of PRBs corresponding to a data selection unit, or the number of REs occupied by a data selection unit in a PRB being an integer multiple of the number of REs occupied by a PRS selection unit in a PRB.

It is to be noted that the number of time-domain symbols included in a data selection unit in an embodiment of the present application is the number of time-domain symbols corresponding to one or more PRS selection units.

In one example, the first communication node determines F categories of data selection unit in the data region, where F is a positive integer greater than 1.

Furthermore, the F categories of data selection unit further include at least one of the following that: the F categories of data selection units correspond to F categories of slot; the F categories of data selection units include different number of frequency-domain resource blocks; the F categories of data selection units include different number of time-domain symbols.

In one example, the F categories of slots further include a slot with a PRS region and a slot without any PRS region.

In one example, the first communication node may determine a category of data selection units corresponding to a slot based on resource condition corresponding to a PRS region included in the slot; or the category of the data selection units is associated with whether the PRS region is configured in a slot.

Optionally, the above resources include one of the following: a slot, a time-domain symbol in a slot, a set of physical resource blocks, a subcarrier, a selection unit; where the selection unit includes a PRS selection unit or a data selection unit.

Optionally, the first communication node may further determine a structure of a slot by at least one of the following, for example: the first communication node determining a structure of a slot based on the PRS region; the first communication node determining a structure of a slot based on whether the PRS region is included in the slot; the first communication node determining a structure of a slot, where the PRS region is included in a slot.

The structure of a slot includes one of the following that: the slot includes the PRS region and a feedback channel region; the slot includes PRS time-domain symbols and not includes data time-domain symbols; the slot includes a control channel region and a PRS region; where the PRS region includes the PRS time-domain symbols.

Furthermore, the slot including the PRS region and the feedback channel region includes at least one of the following that: the slot includes PRS time-domain symbols and feedback channel time-domain symbol; the PRS region and the feedback channel region are located in different time-domain symbols; the time-domain symbols in which the PRS region is located are in front of the time-domain symbols in which the feedback channel region is located; there is a GAP time-domain symbol and/or a power adjust AGC time-domain symbol between the time-domain symbols in which the PRS region is located and the time-domain symbols in which the feedback channel region is located, where the AGC time-domain symbol may also be referred as a repetition time-domain symbol, i.e., it is the transmission of the signal in the time-domain symbol following the AGC on the AGC time-domain symbol, and the first communication node does not transmit signal on this GAP time-domain symbol.

A first time-domain symbol in the PRS region includes a repetition of the signal on a second time-domain symbol in the PRS time-domain symbols; there is an association relationship between the time-domain symbols in which the PRS region is located and the time-domain symbols in which the feedback channel region is located; there is an association relationship between a PRS selection unit in the PRS region and a feedback channel in the feedback channel region; there is an association relationship between a PRS selection unit in the PRS region and a feedback channel selection unit in the feedback channel region.

A feedback channel transmitted in the feedback channel region includes at least one of the following information: an Acknowledgement ACK information or a Negative Acknowledgement NACK information corresponding to a data channel, a measurement result obtained based on a channel state information reference signal CSI-RS, and positioning measurement information obtained based on the PRS.

For example, the slot including a control channel region and a PRS region includes at least one of the following features that: the control channel region and the PRS region are located in different time-domain symbols; the control channel region and the PRS region are adjacent, and there is no GAP time-domain symbol and/or AGC time-domain symbol between the control channel region and the PRS region; the control channel region and the PRS region correspond to different PRBs or different PRS selection units or different resource elements REs.

In one example, the PRS region further includes at least one of the following that: the PRS region includes one or more PRS selection units; the PRS region includes one or more second PRS units in a slot; the PRS region includes one or more PRS selection units in a slot.

Optionally, the above second PRS unit satisfies at least one of the following features that: the signal transmitted in a first time-domain symbol of each second PRS unit is a repetition of a signal transmitted in a second time-domain symbol; the first time-domain symbol of each second PRS unit is an AGC time-domain symbol; there is a gap between the two second PRS units, where the gap includes one or more time-domain symbols, and the first communication node does not transmit a signal on the gap; a resource occupied by a PRS signal belongs to a second PRS unit, where a PRS signal corresponds to a PRS signal resource; a number of time-domain symbols occupied by a PRS signal is equal to a number of time-domain symbols corresponding to a second PRS unit; a second PRS unit includes one or more PRS selection units; there are at least two categories of second PRS units; a second PRS unit includes one or more PRS selection units in the frequency-domain; the second PRS unit contains P time-domain symbols, P is an integer greater than 0; a slot includes one or more second PRS units.

In one example, different categories of second PRS units of at least two categories of second PRS units in the embodiments of the present application correspond to different numbers of time-domain symbols; and/or, each category of the at least two categories of second PRS units corresponds to a PRS pattern respectively, where the PRS pattern includes time-domain symbols occupied and subcarriers occupied by the PRS signal.

The above resource includes one of the following: a slot, a time-domain symbol in a slot, a set of physical resource blocks, a subcarrier, a selection unit; where the selection unit includes a PRS selection unit or a data selection unit.

In embodiments of the present application, the PRS selection unit satisfies at least one of the following features that: a PRS signal occupies one or more PRS selection units; in the case that the PRS signal occupies a plurality of PRS selection units, the plurality of PRS selection units occupied by a PRS signal correspond to the same time-domain symbol; a PRS selection unit only corresponds to a PRS signal; there are multiple categories of PRS selection units, where different categories of PRS selection units correspond to at least one of the following parameters differently: a time-domain symbol, a number of REs occupied in a PRB, a number of corresponding frequency-domain resource blocks, and a pattern of the PRS signal; a PRB corresponds to a plurality of PRS selection units in a slot; a slot corresponds to a plurality of PRS selection units; a PRS selection unit corresponds to B PRBs and K time-domain symbols; a PRS selection unit includes I REs in each of the B PRBs on each of the K time-domain symbols; a PRS selection unit occupies different subcarrier positions on different time-domain symbols in its corresponding K time-domain symbols; a PRS selection unit occupies a total number of I*K REs in each PRB of the K time-domain symbols, where I*K is equal to 12; the PRS selection unit is a basic unit for scheduling a PRS signal; a PRS selection unit includes a control channel region and a PRS region; a first time-domain symbol of a PRS selection unit includes a repeat transmission of a signal in a second time-domain symbol in the PRS selection unit; two categories of PRS selection units in the PRS region, where a control channel is transmitted in a first category of PRS selection unit and a PRS signal is transmitted in a second category of PRS selection unit; where the PRS selection unit herein may also be referred as a control and PRS selection unit, or a selection unit by any other name.

B and K are positive integers greater than or equal to 1, and I is an integer or fraction less than 12.

Optionally, the PRS region corresponds to one of the following: a carrier frequency configuration structure, a bandwidth part BWP configuration structure, a resource pool configuration structure, a set of configuration parameters in a resource pool.

In embodiments of the present application, the first communication node may further determine at least one of the following parameters corresponding to the PRS region based on a ninth signaling information or a predetermined rule: a PRS signal resource list, a physical control channel, time-domain parameters, a set of PRBs corresponding to the PRS region, parameters of the PRS selection unit, a number of PRS selection units included in the PRS region, parameters for determining available PRS selection units in the PRS region, and PRS pattern information.

In one example, communicating the PRS signal in the PRS region in the above S101 satisfies at least one of the following features that: a PRS signal occupies one or more PRS selection units in the PRS region; on a time-domain symbol, a PRS signal occupies a subcarrier every C subcarriers in a set of frequency-domain resource blocks to which the PRS signal corresponds, where C is greater than 12 or C belongs to any of the following parameters {2, 4, 12, 8, 24, 9, 36}; where a PRS signal corresponds to a PRS signal resource.

Optionally, the first communication node may further determine at least one of the following parameters corresponding to the PRS signal resource based on a tenth signaling information or a predetermined rule: pattern information of the PRS signal, a number of PRBs occupied by the PRS signal, positions of the PRBs occupied by the PRS signal, time-domain symbol positions occupied by the PRS signal in a slot, a number of time-domain symbols occupied by the PRS signal in a slot, a number of PRS selection units occupied by the PRS signal, positions of the selection units occupied by the PRS signal, transmit power for the PRS signal, and pattern selection information of the PRS signal, where the pattern information of the PRS signal includes RE positions occupied by the PRS signal in a PRB, and a subcarrier offset corresponding to a PRS pattern.

The first communication node may transmit or receive the ninth signaling information and/or the tenth signaling information.

In one example, the first communication node determines the available PRS selection units among the set of candidate PRS selection units in the PRS region includes: the first communication node detecting an eleventh signaling information in a control channel detection occasion of a predetermined time window; the first communication node determining PRS selection units selected by a second communication node based on the detected eleventh signaling information; the first communication node determining unavailable PRS selection units among the set of candidate PRS selection units based on the PRS selection units selected by the second communication node.

The first communication node detecting the eleventh signaling information in the predetermined time window includes at least one of the following: the first communication node respectively detecting the eleventh signaling information in each control channel detection occasion of the predetermined window; the first communication node respectively detecting the eleventh signaling information in each control channel detection occasion of the predetermined window that satisfies a predetermined feature; where there is a correspondence relationship between the predetermined time window and the set of candidate PRS selection units, and the eleventh signaling information includes one or more signaling information.

It is to be noted that, in the embodiments of the present application, the above first signaling information to the eleventh signaling information, and the following twelfth to fourteenth signaling information are used to distinguish the first communication node from a different communication entity for Sidelink link communication, or are used to distinguish different signaling information between the first communication node and the same communication entity, where the communication entity includes a terminal or a base station, and when it is a base station, the signaling information is signaling information between the base station and the terminal, and the signaling information is not transmitted on the sidelink link, and when the communication entity is a terminal, the signaling information is transmitted on the sidelink between the terminal and the terminal, or, the first communication node communicates with different communication terminals over the sidelink link in different scenarios, and is not used to distinguish difference of signaling. For different communication terminals or different communication scenarios, the information carried in the first signaling information to the fourteenth signaling information may be the same or different, and it does not exclude that some of the signaling information of the first signaling information to the fourteenth signaling information is the same signaling information.

Currently, a configuration method of Sidelink in the related technology is shown in FIG. 2. A Sidelink physical layer-MAC layer-RLC layer configuration structure (SL-PHY-MAC-RLC-config) may include a carrier frequency configuration structure (frequency), and a carrier frequency configuration structure may include a Bandwidth Part configuration structure (BWP), and a bandwidth part configuration structure BWP can include up to 16 receiving resource pools (16 Rx pools), up to 8 transmitting resource pools for mode 1 (8 TX pools for mode1), up to 8 transmitting resource pools for mode 2 (8 TX pools for mode2), and up to 1 transmitting resource pool for exception (1 Tx pool for exception). Each resource pool may include configuration of at least one of the following information: Physical Sidelink Shared Channel (PSSCH), Physical Sidelink Control Channel (PSCCH), Physical Sidelink feedback channel (PSFCH), data sub-channel, information of terminal selection resource (sensing), Phase Tracking Reference Signal (PTRS), time slot structure configuration information (TDD-configuration), region information, power information, filter information, Modulation and Coding Scheme (MCS) information.

Since the transmission bandwidth of PRS is usually required to be larger in order to improve the positioning accuracy of PRS, the bandwidth requirement of PRS is different from that of the data channel, and the transmitting timing of PRS is also different from that of the data channel. In order to realize high-precision positioning in the Sidelink scenario, the embodiments of the present application provide the following several different configuration architectures for the PRS region and the data region, which are independent of each other in the above implementation.

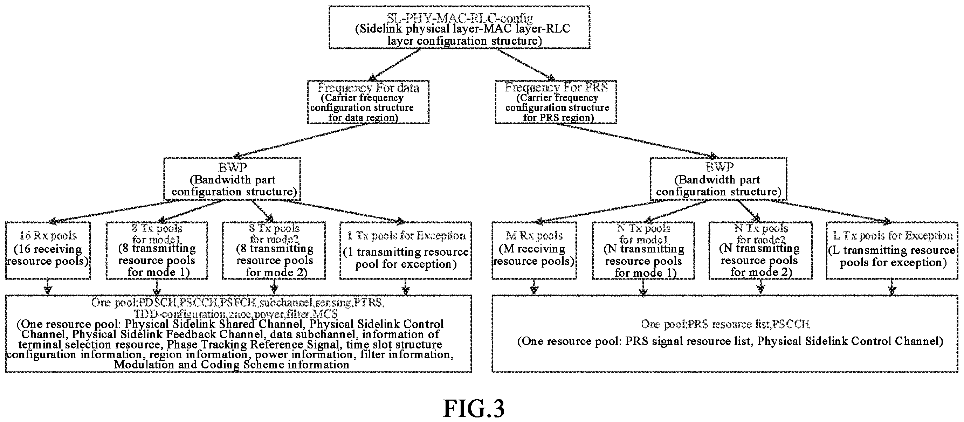

As shown in FIG. 3, the PRS region and the data region may correspond to different carrier frequency configuration structures respectively. For example, one or more BWPs are included in the Frequency for PRS structure, and each BWP includes at least one of the following: up to M receiving resource pools (M RX pools), up to N transmitting resource pools for mode 1 (N TX pools for mode1), up to N transmitting resource pools for mode 2 (N TX pools for mode2), and up to L transmitting resource pools for exception (L TX pools for exception), where M, N, and L are integers greater than or equal to zero. Optionally, M is an integer multiple of N, such as M equals to 2*N. Each of the resource pools includes a configuration of at least one of the following: a configuration of one or more PRS signal resource lists (PRS resource lists), PSCCH. Each PRS signal resource in one of the PRS signal resource lists includes at least one of the following information: a PRS pattern information, the number of PRBs occupied by the PRS, a symbol position occupied by the PRB in a slot, the number of PRS selection units occupied by the PRS signal, and a transmitting power of the PRS. The PRS pattern information includes the RE position occupied by the PRS in a PRB. PSCCH is used for scheduling PRS signal resource and/or PSSCH, and a PRS signal corresponds to a PRS signal resource, different PRS signals are transmitted in different PRS signal resources. The PRS signal resource is a configuration structure or scheduling structure of a PRS signal, which is a configuration structure unit of time-domain, frequency-domain, code domain, and transmitting power corresponding to a PRS signal, and is a logic unit. In embodiments of the present application, a PRS signal is understood to be a PRS signal resource (or referred as a PRS resource), and a resource in a PRS signal resource list is understood to be a PRS signal resource.

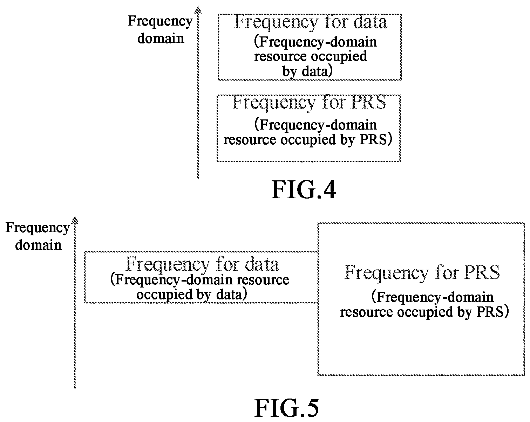

The frequency for data and frequency for PRS are configured with respective corresponding frequency-domain location and frequency-domain bandwidth information, respectively. The two can occupy different frequency-domain resources, as shown in FIG. 4, here they can occupy the same time-domain resources. Or the frequency-domain resources corresponding to the frequency for data are a subset of the frequency-domain resources corresponding to the frequency for PRS, as shown in FIG. 5. Optionally, it may be defined that the subcarrier spacing configured in the BWP included in the frequency for data is the same as the subcarrier spacing configured in the BWP included in the frequency for PRS. Optionally, a period and an offset are configured in the frequency for PRS, the period in the frequency for PRS is existed in a slot, and a resource corresponding to the frequency for data is not included in the slot where the frequency for PRS is located. The existence of the period indicates that the period existed in the set of slots available for Sidelink transmission is an existence of logical period, and may not have periodicity in absolute time. Of course, the existence of the period may also be an existence of periodicity in absolute time, for example, every certain number of slots, there are resources corresponding to the frequency for PRS. The numbering of the slots includes sidelink slots and non-sidelink slots.

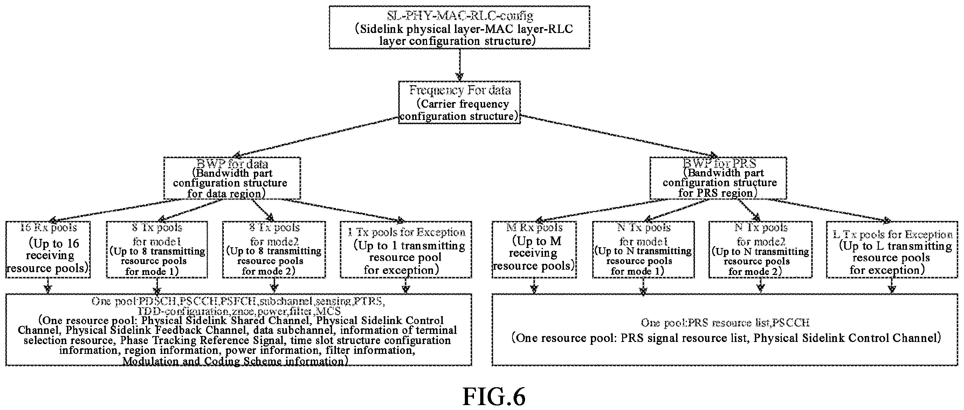

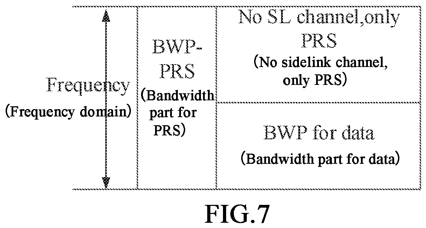

As shown in FIG. 6, the PRS region and the data region correspond to different bandwidth parts BWPs of a configuration structure in a carrier frequency configuration structure, respectively. The two BWPs correspond to different BWPs in the same carrier frequency, and each BWP is allocated with at least one of the following information: a start position in a slot, a number of time-domain symbols in a slot, a set of time-domain symbols in a slot, a subcarrier spacing, and a subset of a set of physical resource blocks PRBs included in the carrier. This configuration manner may enable BWP for data and BWP for PRS to configure their respective bandwidths respectively. The BWP for data and the BWP for PRS may be located in different slots or in different time-domain symbols of a slot. Optionally, the BWP for data and the BWP for PRS occupy consecutive time-domain symbols respectively if they are in a slot. Optionally, it is determined whether the two can be in a slot, or a minimum time gap between them is determined, based on a frequency-domain bandwidth relationship of the BWP for data and the BWP for frequency and/or a relationship of the subcarrier spacing. Furthermore, the range of frequency-domain bandwidths that can be occupied by the BWP for PRS in the bandwidth corresponding to the frequency is greater than the range of bandwidths that can be occupied by the BWP for data. As shown in FIG. 7, a portion of the bandwidth in the bandwidth corresponding to the frequency can only be used for PRS signal transmission and cannot be used for data transmission, and the frequency-domain corresponding to the BWP-SL-channel in FIG. 7 is the BWP for data.

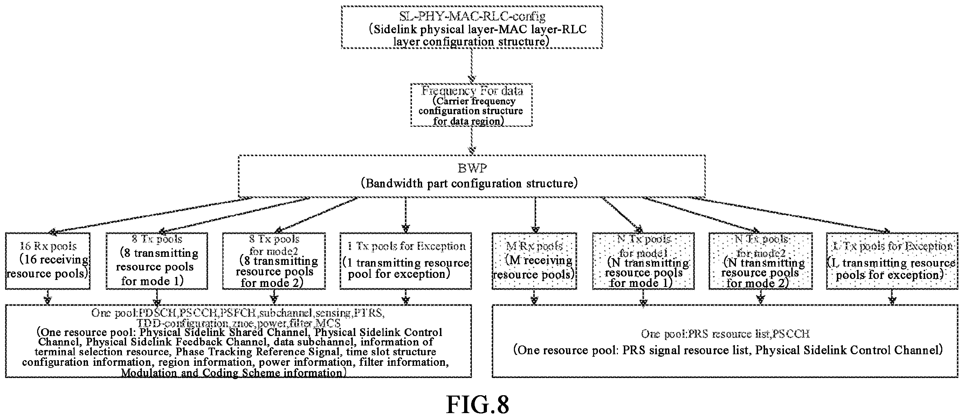

As shown in FIG. 8, the PRS region and the data region correspond to different resource pools in a BWP configuration structure respectively. Each pool may correspond to a part of the time-frequency resources of the BWP, which are configured respectively in each pool. Each pool included in a BWP has the same set of corresponding time-domain symbols in a slot. Optionally, the set of corresponding time-domain symbols in a slot may be configured in each PRS pool, where the set of corresponding time-domain symbols in a slot configured in the PRS pool is a subset of the set of time-domain symbols configured in the BWP. Another method for configuring the set of corresponding time-domain symbols in a slot for each pool includes: respectively configuring a set of time-domain symbols it occupies in a slot in the BWP for each of the data pool group and the PRS pool group, such that each data pool has the same set of corresponding time-domain symbols in a slot and each PRS pool has the same set of corresponding time-domain symbols in a slot. Alternatively, the set of time-domain symbols in a slot configured in the BWP is only for the data pool, and the set of time-domain symbols in the corresponding slot may be independently configured by the PRS pool.

The set of time-domain symbols in a slot corresponding to one of the pools represents the set of corresponding time-domain symbols in each slot where the pool is located. A third configuration method for the set of corresponding time-domain symbols in a slot for each pool includes independently configuring the set of time-domain symbols in its corresponding slot in each pool.

In FIGS. 3, 6, and 8, at least one of the following information is configured in each PRS pool: a PRS resource list, PSCCH. Of course, it is not excluded to configure at least one of the following information in each PRS pool: a PRS resource list, PSCCH, time-domain parameters, a set of PRBs corresponding to the PRS pool, PRS selection unit sub-channel information corresponding to the PRS pool, parameters for selecting the PRS selection unit (which can also be called PRS sensing parameters or PRS selection parameters), PRS pattern information. The PRS sub-channel information corresponding to the PRS pool includes the size of a sub-channel, such as a number of PRBs B included in the PRS sub-channel, and a number of REs I included in the PRS sub-channel in each of its corresponding B PRBs.

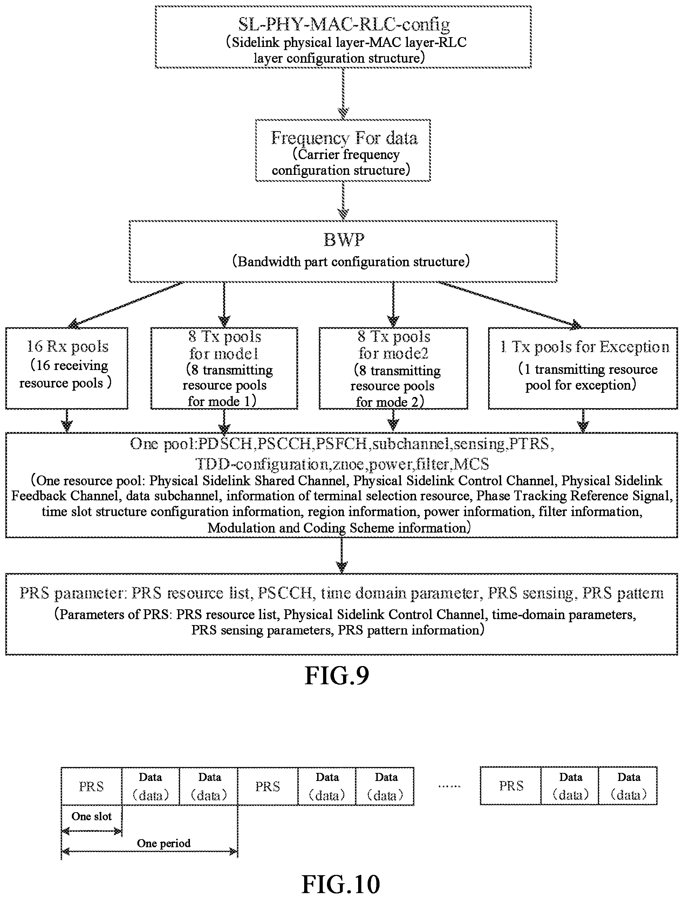

As shown in FIG. 9, the PRS region and the data region correspond to different configuration parameters in a resource pool respectively. The parameters of the PRS include at least one of the following information: a PRS resource list, PSCCH, time-domain parameters, PRS sensing parameters, PRS pattern information, a set of PRBs corresponding to the PRS pool, a PRS selection unit sub-channel information corresponding to the PRS pool, parameters for selecting the PRS selection unit (which can also be called PRS sensing parameters or a PRS selection parameters), PRS pattern information.

A time-domain parameter corresponding to the PRS pool configured in the PRS pool or a time-domain parameter corresponding to the PRS configured in the PRS parameter includes at least one of the following: a PRS period, a set of corresponding time-domain symbols in a slot, a number of first time units L included in a first PRS unit, an interval between two consecutive first PRS units in a period, a number of first PRS units included in a PRS period, X second time units at the beginning of a first PRS unit, Y second time units at the end of a first PRS unit, a set of corresponding time-domain symbol indexes of PRS in a slot, a number of second PRS units included in a first PRS unit. Optionally, there are AGC time-domain symbols, or GAP and AGC time-domain symbols, between the two second PRS units, and a PRS signal occupies only one or more PRS selection units in a second PRS unit. The first time unit or the second time unit includes one of the following: a slot, an OFDM time-domain symbol, or other time unit. A PRS unit includes first time units L. When a PRS needs to be transmitted, a pool including a PRS configuration is selected, a resource for transmitting the PRS is determined in the selected pool, and/or a resource for transmitting the PRS and data is selected, and the PRS, or the PRS and PSCCH, or the PRS, PSCCH, and PSSCH are transmitted on the selected resource. The PRS parameters configured in the respective pools may be different, or the PRS parameters configured in the respective pools may be defined to be the same, such as the PRS parameters configured in the respective pools in 8 TX pools for mode2 satisfy predetermined conditions, such as being the same, or all falling within a predetermined range. The X second time units and the Y second time units may also be referred as Gaps in which no signals are transmitted or received.

The configuration information of a PSCCH configured in a PRS pool or in a PRS parameter includes at least one of the following information: a period of the PSCCH, size information of a sub-channel of the PSCCH, a number of sub-channels or a set of PRBs that may be occupied by all PSCCHs in the pool, a set of all PSCCH time-domain symbols in the pool, DMRS scrambling sequence parameters of the PSCCH, a number of time-domain symbols occupied by a PSCCH, and a set of PRBs occupied by a PSSCH. A Sidelink receiving end detects a control channel in each sub-channel of the PSCCH to determine at least one of the following information: whether to receive the PRS signal, which resources in the PRS region have been selected/reserved by other communication nodes, cannot be selected, and need to be excluded from a set of candidate resources, and which PRS selection units in the PRS region have been selected/reserved by other communication nodes.

The parameters configured in the PRS pool or in the PRS parameters for selecting the PRS selection unit (or which can be called PRS sensing parameters, or called parameters for selecting the PRS) include: parameters required for the terminal node for mode2 to determine the PRS signal to be transmitted in the PRS pool, for example, a time-domain window parameter corresponding to a set of candidate PRS signal resources, a detection window for the PSCCH, and detecting the PSCCH in the PSCCH window, thereby determining which PRS selection resources are available in the set of candidate PRS signal resources. Furthermore, the PSCCH appears periodically in the detection window of the PSCCH, rather than needing to be detected in each slot.

The PRS pattern information configured in the PRS pool or in the PRS parameters includes information of the time-domain symbols and RE locations occupied by the PRS in a slot, or the PRS pattern information includes selection information in a plurality of predetermined PRS patterns, such as selection information in a plurality of patterns in comb 2, come 4, comb 6, comb 12, where the RE and time-domain symbols occupied by comb 2, come 4, comb 6, comb 12 in a PRB are predetermined. Of course, it can further include an offset of the comb, an offset of the time-domain symbols, for example, comb 2 occupies two consecutive time-domain symbols with 6 uniformly distributed REs in each time-domain symbol, different REs occupied in two time-domain symbols with a fixed offset, for example, occupying an even position RE in the first time-domain symbol and occupying an odd position RE in the second time-domain symbol. In this way, in two time-domain symbols, including two PRS signals, the first PRS signal resource occupies the even position RE in the first time-domain symbol and occupies the odd position RE in the second time-domain symbol, and the second PRS signal resource occupies the odd position RE in the first time-domain symbol and occupies the even RE in the second time-domain symbol. It is informed, in the PRS pattern information, the comb offset information (i.e., the comb offset, i.e., the above selection information of the first PRS signal and the second PRS signal), and the occupied two time-domain symbols being which two time-domain symbols in a slot (i.e., time-domain symbol offset). The number of subcarriers C of the gap between the subcarriers occupied by the PRS on a time-domain symbol in the PRS pattern may be greater than 12, that is, the number of combs corresponding to the PRS pattern is C. Or the number of C is different from the number of time-domain symbols occupied by the PRS. The number of subcarriers C indicates that a PRS signal occupies a RE (resource element) for every C RE gaps in a OFDM symbol, e.g. C belongs to {2, 4, 12, 8, 24, 9, 36}. Because the distance of the Sidelink link is short and the multipath spread is short, allowed combs can be large, or the range of C is related to the distance of the Sidelink communication.

In the above four configuration ways, a set of PRBs occupied by a PRS signal resource can be configured at one of the following levels: frequency level, where each PRS signal resource under a frequency includes the same set of PRBs; BWP set, where each PRS signal resource under a BWP includes the same set of PRBs; pool level, where each PRS signal resource under a pool includes the same set of PRBs; PRS resource level, where each PRS resource may include different sets of PRBs; the number of PRBs notified in the PSCCH that are occupied by a PRS signal or the number of PRS sub-channels notified in the PSCCH that are included in a PRS signal resource, where one of the sub-channels includes a predetermined number of PRBs, the number of PRBs included in the sub-channel may be configured at the BWP level, or configured at the pool level.

Optionally, the data region in the following description may correspond to the data resources configured in the frequency for data in FIG. 3, the BWP for data in FIG. 6, the pool for data in FIG. 8, and the pool in FIG. 9. The PRS region corresponds to data resources configured in the frequency for PRS in FIG. 3, the BWP for PRS in FIG. 6, the pool for data in FIG. 8, and the pool in FIG. 9.

In one example, in the above embodiment, PRS region and data region which are independent to each other may correspond to different time slots respectively. For example, the first communication node described above may transmit and/or receive a PRS signal in the PRS region and transmit and/or receive a data signal in the data channel in the data region. As shown in FIG. 10, the period of PRS is 3 slots, and if there is a PRS signal to be transmitted by the sidelink node, the PRS signal can be only transmitted in the slot where the PRS region is located. Furthermore, whether a PRS signal can be transmitted or received in a PRS slot depends on the subframe structure configuration. For example, in the case of Frequency Division Duplexing (FDD), i.e., paired spectrum, the Sidelink node can only transmit on the uplink carrier. In the case of Time Division Duplexing (TDD), the sidelink node can transmit a PRS signal only if there are enough uplink time-domain symbols (e.g., configured to have all uplink signal categories on the time-domain symbols of the PRS) in the slot where the PRS is located, e.g., transmitting a PRS signal in the slot where the PRS region is located. Conversely, if there is a slot where the region is located, and if there is a time-domain symbol not configured as an uplink time-domain symbol in the time-domain symbols corresponding to the PRS region, the PRS cannot be transmitted in the slot, or each second PRS unit of the PRS region determines whether the PRS signal can be transmitted in the slot respectively, e.g., the PRS region including the time-domain symbols {7, 8, 9, 10, 11, 12} in slot n, where the time-domain symbols {7, 8, 9} are one second PRS unit and the time-domain symbols {10, 11, 12} are time-domain symbols of another second PRS unit, where the time-domain symbols {7-8} are configured as downlink time-domain symbols, and {9-12} are uplink time-domain symbols, then the PRS cannot be transmitted in the second PRS unit corresponding to the time-domain symbols {7, 8, 9}, but the PRS signal can be transmitted on the second PRS unit corresponding to the time-domain symbols {10, 11, 12}, or at least the PRS selection unit included in the second PRS unit corresponding to the time-domain symbol {10, 11, 12} can be included in a set of candidate PRS selection units, and the terminal further determines available PRS selection units among the candidate PRS selection units based on the signaling information and/or a predetermined rule, selects one or more PRS selection units among the determined available PRS selection units, and transmits a PRS signal on the selected PRS selection units and/or as a reserved PRS selection unit.

The PRS region and the data region in the embodiments of the present application have different transmission bandwidths for the corresponding slots respectively, as shown in FIG. 11. The frequency-domain bandwidth of the slot where the PRS region is located may be larger than the frequency-domain bandwidth of the slot where the data region is located. The first communication node transmits or receives information transmitted in the large bandwidth only in the slot where the PRS region is located, and in a slot where the PRS time-domain symbols are not configured, it only needs to transmit or receive information transmitted in the small bandwidth.

In order to avoid the first communication node switching between two different transmission bandwidths (i.e., the above large and small bandwidths), in the case that the first communication node transmits the information in the transmission bandwidth of the slot corresponding to the PRS region, the first communication node would not receive or transmit the information of the first X second time units and the following Y second time units of the time-domain symbol where the PRS region is located, where X and Y are positive integers. Optionally, X and Y may be fixed values, or X and Y are dependent on the ability of the first communication node to report. Optionally, X, Y may be associated with a subcarrier spacing, with different subcarrier spacings corresponding to different X and Y Optionally, X may be equal to Y

The first communication node may obtain X and/or Y based on at least one of the following information: signaling information transmitted by the base station, signaling information transmitted by the first communication node transmitted by the Sidelink node, capability information of the Sidelink node receiving the first communication node feedback, a relationship between the corresponding bandwidth of the PRS region (i.e., PRS bandwidth) and the corresponding bandwidth of the data region (i.e., data bandwidth), a relationship between the PRS subcarrier spacing and the data subcarrier spacing, and a relationship between the PRS center carrier frequency and the data center carrier frequency. For example, in the case that the PRS bandwidth and the data bandwidth are the same, or both the PRS bandwidth and the data bandwidth fall within a carrier bandwidth range, X and Y are zero; otherwise, X and/or Y are greater than zero. In the case that the PRS bandwidth is greater than data bandwidth, X and/or Y are greater than 0.

One of the above second time units include one of the following information: a time-domain symbol, a slot, or other time unit.

It should be noted that the above X second time units and Y second time units are only for a communication node that transmits PRS signal, i.e., this restriction is only for a communication node that transmits PRS signal, and other communication nodes can transmit or receive signals in the X second time units and Y second time units. The signals herein include at least one of the following: data channel signals, control channel signals, reference signals. Alternatively, the above X second time units and Y second time units are for a group of communication nodes, in which communication nodes in the group of communication nodes cannot transmit or receive signals in the X second units and Y second time units, whereas communication nodes not belonging to the group of communication nodes can transmit or receive signals in the X second time units and Y second time units. Furthermore, a communication node in the group of communication nodes transmits the PRS signal and the other communication nodes receive the PRS signal. For example, when the PRS signal is transmitted in a unicast mode, the group of communication nodes includes a transmitting node and a receiving node in the unicast mode. When the PRS signal is transmitted in a multicast mode, the group of communication nodes includes a transmitting node and a receiving node in the multicast service; when the PRS signal is transmitted in a broadcast mode, the group of communication nodes includes a transmitting node and a receiving node in the broadcast service. Alternatively, the above group of communication nodes includes Sidelink nodes under a unit, and all Sidelink nodes corresponding to a unit are unable to transmit or receive Sidelink signals in X second time units and Y second time units, or all transmitting nodes and receiving nodes on a Sidelink link are unable to transmit or receive signals in X second time units and Y second time units.

As shown in FIG. 12, L PRS slots exist consecutively, and then exist consecutively after every predetermined number of slots, and the L PRS slots are referred as a first PRS unit, i.e., there are a predetermined number of first PRS units in a PRS period. Furthermore, the PRS period may be determined, such as 16 frames as a period. In FIG. 12, the X second time units and the Y second time units are outside of the L PRS slots. Optionally, the X second time units and the Y second time units may also be within the L PRS slots, as shown in FIG. 13, for example, the X second time units and the Y second time units are at a start position and an end position of the L PRS slots respectively.

Furthermore, the first communication node may determine the PRS slot based on at least one of the following parameters: a period of the PRS slot, a number of slots L included in a first PRS unit, a number of first PRS units included in a period, a time interval between two consecutive first PRS units in a period, X second time units, and Y second time units. The above parameters may be obtained by signaling information or predetermined parameters, the signaling information including at least one of the following: dedicated signaling information or System Information Block (SIB) transmitted by a base station, signaling information transmitted by a Sidelink transmitting node. The signaling information or predetermined parameters may further include at least one of the following parameters: time-domain symbol indexes corresponding to PRS in a PRS slot, size information of a PRS sub-channel. For example, the PRS sub-channel corresponds to at least one of the following parameters: a time-domain symbol location, a number of time-domain symbols, a number of Physical Resource Blocks (PRBs) included in the PRS sub-channel, a location of the PRB corresponding to the PRS sub-channel, a number of Resource Elements (REs) occupied by the PRS sub-channel in each PRB, a location of the RE corresponding to the PRS sub-channel.

For mode2, the first communication node determines available resources for transmitting the PRS by excluding the slots occupied by the data channel from the resources in the candidate resource window (or a set of candidate resources) as shown in FIG. 14, and determining the remaining resources as a set of PRS available resources, and selecting one or more resources in the set of PRS available resources for transmitting. As shown in FIG. 14, the PRS available resources are determined in the PRS portion, e.g., the Sidelink transmitting node determines that it needs to transmit a PRS signal in slot n. The candidate resource window in FIG. 14 corresponds to a time range from slot $(n+T_1)$ to slot $(n+T_2)$. The resources corresponding to the PRS signal assigned by the base station to the Sidelink transmitting node for mode1 are within the PRS region range of FIG. 14. The resources and the resources in the candidate resources include one of the following: a subcarrier, a PRB, a slot, a time-domain symbol in a slot, a selection unit, where the selection unit includes a PRS selection unit or a data selection unit.

For mode2, the first communication node determines the available resources for transmitting data channel, by excluding every L PRS slots (i.e., each first PRS unit) from the resources in the candidate resource window as shown in FIG. 14, and determining the remaining resources as the available resources for the data channel, i.e., the available resources for the data channel are the slots after excluding every L PRS slots in FIG. 14. The data channel cannot be transmitted in the L PRS slots shown in FIG. 14. Optionally, it is also possible to exclude only the PRS portion of FIG. 14, that is, the first X second time units and the following Y second time units in the L slots are not excluded, and the first communication node can transmit the data channel on the X second time units and the Y second time units. Optionally, the first communication node may further determine whether the X second time units and the Y second time units are excluded, i.e., whether they are used for transmitting the data channel, based on signaling information or a preset rule. For example, the X second time units and the Y second time units are excluded when the transmitting node is required to transmit a PRS signal in the first PRS unit; otherwise, the X second time units and the Y second time units are not excluded. Alternatively, in the case that the first communication node for transmitting data belongs to a predetermined group of communication nodes, X second time units and Y second time units would be excluded; otherwise, X second time units and Y second time units are not excluded.

Optionally, for mode 2, as shown in FIG. 12, if the X second time units and Y second time units are not included in the L first time units (i.e., the PRS portion), but are in the front and behind outside of the L first time units, then the first communication node determines available resources for transmitting a data channel by excluding slots corresponding to the PRS region from the resources in the candidate resource window, and after the X second time units and Y second time units (i.e., every L PRS slots and the X second time units and Y second time units), the remaining resources are determined as the resources which can be occupied by the data channel. Optionally, the first communication node may further determine whether the X second time units and the Y second time units are excluded, i.e., whether they are used for transmitting the data channel, based on the signaling information or the preset rule. For example, in the case that the transmitting node is required to transmit a PRS signal in the first PRS unit, the X second time units and the Y second time units would be excluded; otherwise, the X second time units and the Y second time units are not excluded. Alternatively, in the case that the first communication node transmitting the data belongs to the group of predetermined communication nodes, the X second time units and Y second time units would be excluded; otherwise, the X second time units and Y second time units are not excluded.

Optionally, one of the resources in the above PRS region or the data region may include at least one of the following: a time-domain resource, a frequency-domain resource, a plurality of REs included in a sub-channel, a subcarrier RE. Accordingly, the resource further includes at least one of the above when the first communication node determines the set of resources in the PRS region or data region.

A PRS signal resource in a PRS signal resource list in embodiments of the present application is a generic term for a logical body of time-domain, frequency-domain, code domain resources, and transmit power occupied by a PRS signal, with different PRS signals occupying different PRS signal resources. Time, frequency, code and/or power information corresponding to a PRS signal is configured in a PRS signal resource. In embodiments of the present application, a PRS signal is understood as a PRS signal resource (or referred as a PRS resource), and one or more PRS signal resources are included in the PRS signal resource list.

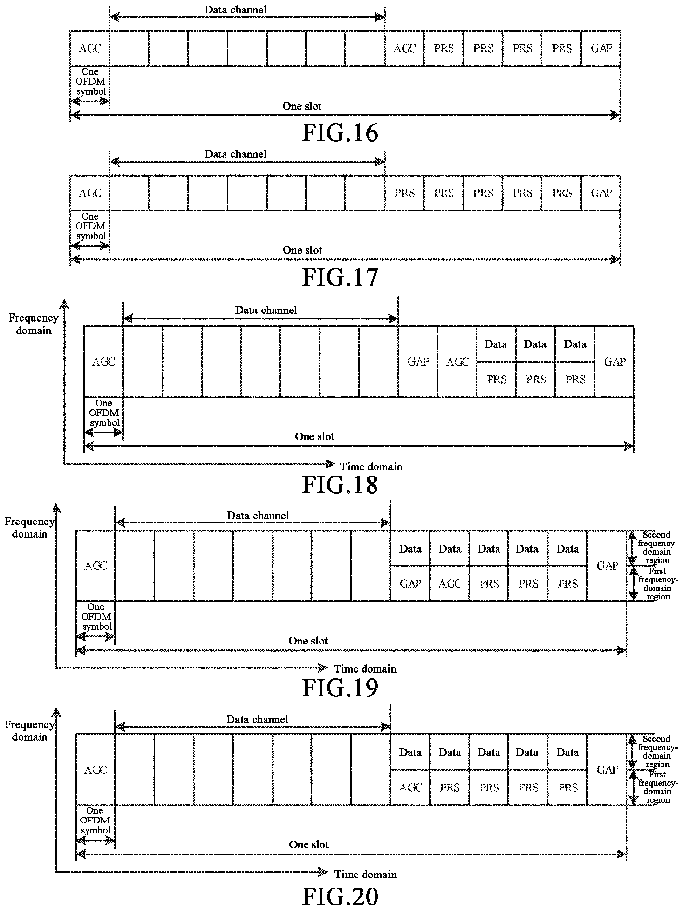

In one example, the above PRS region and the data region may also correspond to different time-domain symbols of a slot respectively. That is, the PRS signal is transmitted only in the time-domain symbol where the PRS region is located, and the Physical Sidelink Shared Channel (PSSCH) does not occupy the time-domain symbol where the PRS is located. As shown in FIG. 15, FIG. 16, and FIG. 17, in the slot where the PRS signal is located, both the time-domain symbols corresponding to the PRS region and the time-domain symbols corresponding to the data region are included, where the difference between FIG. 15 and FIG. 16 is that in FIG. 16 there is no GAP time-domain symbols between the PRS time-domain symbols and the data channel, but only the Adapt Gain Control (AGC) time-domain symbols, and herein the AGC time-domain symbols represent that the signals transmitted in the AGC time-domain symbols are the repetitions of the signals transmitted on the neighboring time-domain symbols after them. The REs occupied by their signals are the same, but of course it is not excluded that the REs occupied by them can be different, just that the signals are the same. In this case, a communication node that transmits a data channel cannot receive a PRS signal on a PRS time-domain symbol, and a communication node that receives a data channel cannot transmit data channel in a PRS region. That is, for a communication node, the PRS region and the data region are for communication in the same direction, either both for transmitting or both for receiving. Optionally, a communication node that transmits a data channel and a communication node that transmits a PRS may belong to the same group of communication nodes. There is no AGC between the data channel and the PRS time-domain symbols in FIG. 17, and optionally, there may be a Physical Sidelink Control Channel (PSCCH) for scheduling the PRS on the time-domain symbols of the data channel. Data channel and/or control channel may be transmitted in the data channel portion, and if there is no data channel and only control channel, the data channel portion in FIG. 17 may also be referred as control channel portion.

Optionally, not each slot has a time-domain symbol corresponding to the PRS region. The time-domain of the PRS region may occur periodically, and there is a time-domain symbol corresponding to the PRS region in the slot where the period of the PRS region is located, and if it is not the slot where the period of the PRS region is located, then there is no time-domain symbol corresponding to the PRS region in the slot. The period of the PRS region may be an absolute time-domain period or a logical period of the PRS region in the sidelink slot set, which may not be periodic in absolute time, e.g., the sidelink slot set including {slot0, slot3, slot4, slot5, slot8, slot9, slot12, slot15, slot17....}. If the period of the PRS region is 3, then the PRS region is in {slot0, slot5, slot12}, where the Sidelink slot set is determined based on the configuration of the uplink time-domain symbols in the slot, or determined based on the configuration of the uplink time-domain symbols in the slot and the configuration of the Sidelink SSB.

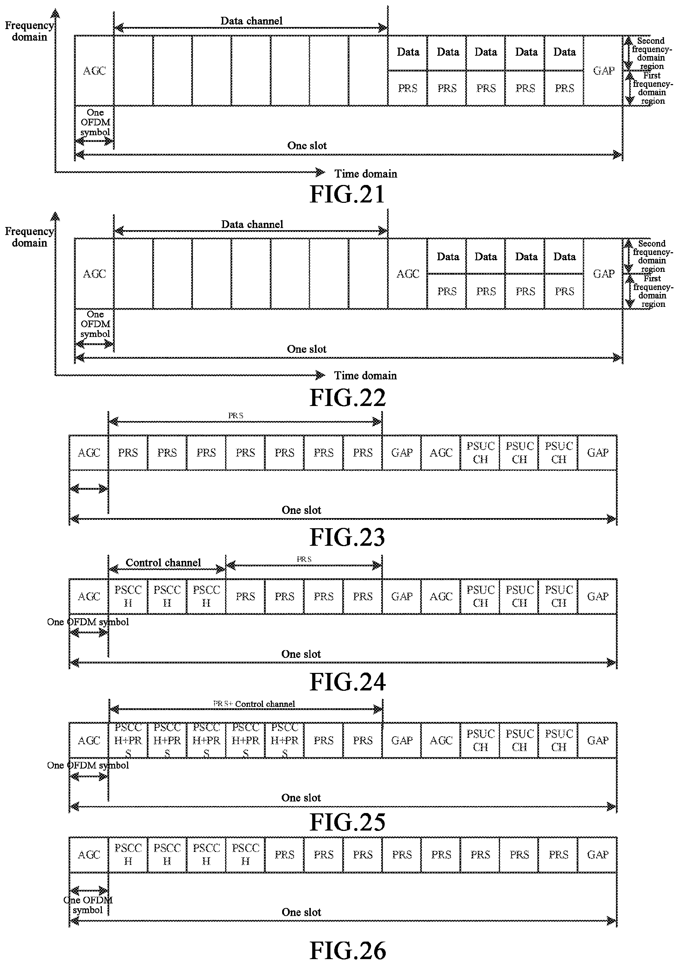

In one example, the PRS region and the data region may further correspond to different frequency-domain resources on a time-domain symbol respectively. For example, the PRS signal is only transmitted in the region where the PRS region is located, and the PSSCH does not occupy the PRB resources corresponding to the PRS region. As shown in FIGS. 18-22, in a slot, there are only time-domain symbols corresponding to data channels, such as time-domain symbols {1~7}, and there are also time-domain symbols that include both data channels and PRSs, such as time-domain symbols {10-12}. In FIG. 18, there are GAPs and AGCs between the two categories of time-domain symbols. Optionally, a data channel may occupy only the time-domain symbols {1-7} or only the time-domain symbols in the time-domain symbols {10-12}. Furthermore, only frequency division multiplexing is possible between data sub-channels in the time-domain symbols {1~7}, and frequency division multiplexing and/or time division multiplexing is possible between data sub-channels in the time-domain symbols {10-12}. For example, a data sub-channel occupies one or more time-domain symbols in the time-domain symbols {10~12}, and a data channel and/or a control channel may be transmitted in a data sub-channel. Optionally, the data channel in the time-domain symbols {10-12} may include a PSCCH for scheduling the PRS. The difference between FIG. 19 and FIG. 18 is that in the second frequency-domain region, there is neither GAP time-domain symbol between the time-domain symbols {11-13} and the time-domain symbols {1~7}, and nor AGC time-domain symbol. Furthermore, a data channel cannot span the first frequency-domain region and the second frequency-domain region, i.e., when a Sidelink node transmits data channel, the occupied frequency-domain resources thereof cannot include both resources in the first frequency-domain region and resources in the second frequency-domain region. Optionally, if the first communication node acts as a receiving node, it needs to have the ability to adjust the receiving power for the first frequency-domain region and the second frequency-domain region respectively. In the second frequency-domain region, the data channel occupies 12 time-domain symbols, i.e., it occupies the frequency-domain resources on the time-domain symbols where the PRS is located, and in the first frequency-domain region, the data channel occupies 7 time-domain symbols, i.e., it does not occupy the frequency-domain resources on the time-domain symbols where the PRS is located. Optionally, a sub-channel cannot include both resources in the first frequency-domain region and resources in the second frequency-domain region. In FIG. 20, there are only AGC time-domain symbols and no GAP time-domain symbols before the PRS time-domain symbols in the first frequency-domain region. In FIG. 21, there are neither GAP time-domain symbols nor AGC time-domain symbols before the PRS in the first frequency-domain region. In FIG. 22, there are only AGC time-domain symbols and no GAP time-domain symbols before the PRS time-domain symbols. Optionally, there may be control channel for scheduling the PRS in the data channel portion. The number of time-domain symbols occupied by the data channel in FIGS. 18 to 22 is greater than the number of time-domain symbols occupied by the PRS. Of course, the number of time-domain symbols occupied by the PRS may also be greater than the number of time-domain symbols occupied by the data channel, i.e., the data channel and data in FIGS. 18-22 are replaced with PRS, and PRS is replaced with data.

In one example, a slot includes PRS time-domain symbols and feedback channel time-domain symbols, as shown in FIG. 23. Furthermore, the PRS time-domain symbols are in front of the feedback time-domain symbols, and there are GAPs and AGCs between the PRS time-domain symbols and the feedback channel time-domain symbols. Furthermore, the feedback channel may also be referred as PSFCH or PSUCCH, or other signals. The feedback channel includes at least one of the following information: an ACK/NACK corresponding to the data channel, a measurement result obtained based on the CSI-RS, and a positioning measurement information obtained based on the PRS.

Furthermore, control channel time-domain symbols, PRS time-domain symbols, and feedback channel time-domain symbols are included in a slot, and there is neither GAP nor AGC between the control channel time-domain symbols and the PRS time-domain symbols, and the control channel time-domain symbols include control channel for scheduling the PRS.

As shown in FIG. 24, the control channel and the PRS are in different time-domain symbols, and in embodiments of the present application, it is not excluded that there are both frequency-domain resources occupied by the PRS signal and frequency-domain resources occupied by the control channel in a time-domain symbol, as shown in FIG. 25, e.g., they occupy different sub-channels or they occupy different REs, or they occupy different PRBs.

In FIGS. 23 to 25, the numbers of time-domain symbols occupied by the PRS signal, the feedback channel, the control channel, and the PRS signal + the control channel are only examples, and do not exclude other cases, or the time-domain symbols occupied by each of them as well as the number of time-domain symbols may be signaling-configured or predefined.

Furthermore, an association relationship between the PRS sub-channel and the feedback resource may further be established.

In one example, control channel and PRS signal may be included in a slot, where the control channel and the PRS are time division multiplexed and there is no GAP and AGC time-domain symbols between the control channel and the PRS signal, as shown in FIG. 26.

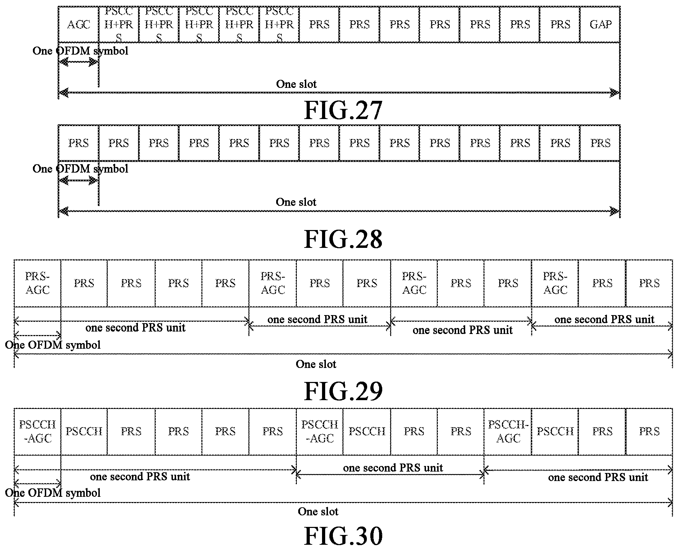

Alternatively, as shown in FIG. 27, the PRS signal, the PSCCH, and the PRS signal may be included on the time-domain symbol where the PSCCH is located, where the PRS signal, the PSCCH, and the PRS signal may occupy different PRBs, or different sub-channels, or different REs.

In one example, the PRS time-domain symbols may be included in a slot, excluding the control channel time-domain symbols, the data channel time-domain symbols, and the feedback channel time-domain symbols. Alternatively, AGC time-domain symbols and GAP time-domain symbols are also not included, as shown in FIG. 28.

In one example, there are a plurality of second PRS units in a PRS transmission region of a slot, a signal transmitted in a first time-domain symbol in each second PRS unit is a repeat transmission of a signal transmitted in a second PRS unit, a first time-domain symbol in each second PRS unit may also be referred as an AGC time-domain symbol, and a second PRS unit includes P time-domain symbols, and the first of the P PRS time-domain symbols is an AGC time-domain symbol. As shown in FIGS. 29 and 30, in FIG. 29, P=5 in the previous second PRS unit and P=3 in the last three second PRS units, the PRS time-domain symbols included in each second PRS unit may be different, and a PRS signal (or called a PRS signal resource) occupies the time-domain symbols in a second PRS unit, and cannot occupy the time-domain symbols in different second PRS units. A PRS sub-channel also includes only time-domain symbols in a second PRS unit and does not include time-domain symbols in different second PRS units. In FIG. 30, P=6 in the previous second PRS unit and P=4 in the last two second PRS units, and each second PRS unit includes a control channel time-domain symbol and (P-2) PRS time-domain symbols, where the control channel in each second PRS unit may schedule a PRS signal from this unit. The control channel and PRS time-domain multiplexed in a second PRS unit in FIG. 30, optionally, does not exclude that the control channel and PRS in a second PRS unit may be frequency division multiplexed, such as occupying different REs, different sub-channels (i.e., selection units), and different PRBs, where the selection units include a PRS selection unit or a data selection unit.

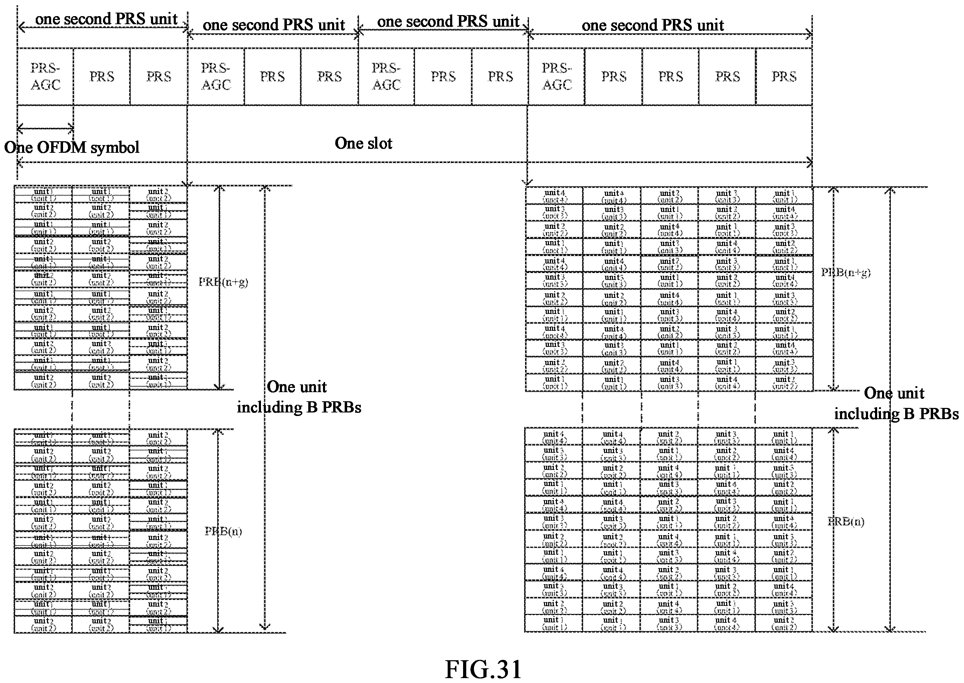

In one example, when it is necessary to transmit a PRS signal, a resource in a PRS region is selected that can transmit a PRS signal, the PRS signal is transmitted in the selected resource, and of course the PRS signal and a PSCCH can be transmitted in the selected resource; or the terminal selects a resource in a set of candidate resources, transmits a RPS signal and/or transmits a PSCCH in the selected resource, where the PSCCH includes the selected resource, and the PSCCH can be transmitted in the above selected resource or in the resource selected in the data region. A PRS region includes Q PRS selection units, each selection unit may also be referred as a PRS sub-channel, a PRS selection unit may also be referred as a PRS scheduling unit, a PRS signal occupies one or more PRS selection units, and a PRS signal is transmitted in a consecutive plurality of PRS selection units. A PRS sub-channel corresponds to I REs per time-domain symbol in each of B PRBs in the frequency-domain and occupies K time-domain symbols in the time-domain symbols, where I is an integer less than or equal to 12, for example, I is {6, 3, 1, 1/2, 1/3}, and I less than 1 is to indicate that the PRS sub-channel occupies a RE per 1/I PRB, or to indicate that the density of a PRS sub-channel is I in the frequency-domain, where K is a positive integer, K is less than or equal to the number of time-domain symbols included in the PRS region, or K is less than or equal to the number of time-domain symbols included in the PRS region in a slot, or K may take a value of the number of time-domain symbols corresponding to a second PRS unit in the case that there are F categories of the sub-channel of the data region, or K is the number of time-domain symbols corresponding to the PRSs in a second PRS unit. As shown in FIG. 31, B consecutive PRBs in the K time-domain symbols occupied by each second PRS unit constitute C PRS selection units. Optionally, C is the number of combs, i.e., a PRS signal occupies a subcarrier for every C subcarriers in a time-domain symbol, and C is 2 in the first three second PRS units in FIG. 29, i.e., for unit1 and unit2 in FIG. 31, and C is 4 in the fourth second PRS unit in FIG. 31. If the total frequency-domain resources corresponding to the second PRS units include A PRBs, there are total of $2*\lceil A/B \rceil 2*$ (or $2*\lceil A/B \rceil$) PRS se-

lection units on each second PRS unit of the first three second PRS units. In a slot in FIG. 31, there are total of 4 second PRS units, and then there are total of $6*\lceil A/B \rceil$ (or $6*\lfloor A/B \rfloor$) PRS selection units in the first three second PRS units. The fourth PRS unit occupies 5 time-domain symbols, total of $4*\lceil A/B \rceil$. Alternatively, it may further be specified that all frequency-domain resources corresponding to the second PRS unit are frequency-domain resources corresponding to a PRS selection unit, such that a second PRS unit in FIG. 31 corresponds to C PRS selection units, and a slot corresponds to 6 PRS selection units. A PRS signal, if to be transmitted, will be transmitted in one or more PRS selection units in a second PRS unit. It may further be indicated occupied as well as reserved PRS selection units by a transmitting end in the PSCCH. In FIG. 31, there are two categories of second PRS units corresponding to two categories of RPS patterns, with each of the first three second PRS units occupying three time-domain symbols and the last second PRS unit occupying five time-domain symbols, where the previous time-domain symbol of each second PRS unit is a PRS-AGC time-domain symbol, where the transmitted signals are repetitions of the signal transmitted in its subsequent time-domain symbol.

The selection unit occupied by the PRS signal as well as the reserved PRS selection unit may be notified by a PSCCH, in which the PSCCH may occupy a different time-domain symbol from the PRS signal, as shown in FIG. 28, and may further occupy resources in the PRS selection unit, such as resources in a few beginning PRBs in each unit in FIG. 31 may be occupied by the PSCCH, and it may include information for scheduling a PRS in the PRS selection unit in this PSCCH. Alternatively, the PSCCH and the PRS signal occupy different PRS selection units in FIG. 29 respectively, such as unit1 for the transmitting of the PSCCH and unit2 for the transmitting of the PRS signal.

Optionally, when the terminal needs to transmit PRS, it determines available PRS selection units in the candidate PRS selection units, selects one or more PRS selection units in the available PRS selection units, and transmits PRS in the selected one or more PRS selection units. And/or the terminal transmits a signaling information, the signaling information (e.g., a twelfth signaling information) including information of the selected PRS selection unit, where the signaling information is transmitted on the selected resource or on other resources.

Optionally, the terminal determining the available PRS selection units in the candidate PRS selection units includes the following: detecting a control channel by the terminal at each control channel detection occasion in a predetermined time window, determining the PRS selection unit selected by the second communication node based on the detected control channel, determining whether the PRS selection unit in the candidate PRS selection units is available based on the PRS selection unit selected by the second communication node, for example, if a PRS selection unit in the candidate PRS selection unit that overlaps with the PRS selection unit selected by the second communication node is unavailable, the terminal excludes the unavailable PRS selection unit from the candidate PRS selection units, and the remainders are the available PRS selection units, and selects one or more PRS selection units among the available PRS selection units. The above is that the terminal detects the control channel in each control channel detection occasion of the predetermined time window, and another implementation of the present embodiment is that the terminal detects the control channel in the control channel detection occasion of the predetermined time window that satisfies predetermined conditions. The control channel detection occasion that satisfies the predetermined conditions includes a control channel detection occasion in one of every Z slots in the predetermined window, which falls in the PRS region. That is, instead of detecting the control channel at each control channel detection occasion in the predetermined window when determining available PRS selection units, for example, instead of detecting the control channel in each subchannel of each slot to determine the PRS selection unit selected by the second communication node, the terminal detects in a portion of a slot, or a portion of a subchannel, of the predetermined window. Thereby, the complexity with which the terminal can determine the available PRS selection units can be reduced. Optionally, a control channel detection occasion corresponds to a selection unit, the selection unit including a PRS selection unit and/or a data selection unit.

Optionally, it is determined that a PRS selection unit is occupied by another transmitting end, needs to be excluded from the candidate resource region and cannot be used as a currently selectable resource based on a determination condition that includes a received power RSR of the PRS signal on the PRS selection unit being higher than a predetermined value.

Furthermore, each of the PRS signal and the data channel selects an available resource in its respective region, selects a resource in the PRS region when a PRS needs to be transmitted, transmits the PRS signal on the selected resource, and of course can further transmit the PRS signal and the PSCCH on the selected resource. When the data channel PSSCH needs to be transmitted, only the available resources are selected in the data region, the PSSCH is transmitted on the selected resources, and of course the PSSCH and PSCCH can further be transmitted on the selected resources. The composition of the PRS selection units corresponding to the PRS region (which can also be referred as the selection unit) and the data selection units corresponding to the data region (which can also be referred as the data channel region, and the control channel region) are independent and different. For example, a PRS selection unit in the PRS region corresponds to I RE resources in each of consecutive B PRBs in the frequency-domain, a PRS selection unit corresponds to P time-domain symbols in the time-domain, the number of time-domain symbols corresponding to a slot is greater than or equal to the number of time-domain symbols corresponding to the PRS selection unit, and a slot includes one or more PRS selection units in the time-domain, whereas a data selection unit corresponds to 12 REs in each of consecutive D PRBs in the frequency-domain, and corresponds to E time-domain symbols in the time-domain, and the granularity of the data selection unit is a slot. It may include frequency-domain resources corresponding to multiple PRS selection units in a PRB, while it may only include frequency-domain resources corresponding to a data selection unit in a PRB. Different PRS selection units in a slot may be time-division and/or frequency-division, while different data selection units in a slot may only be frequency-division. The sets of time-domain symbols corresponding to different data selection units are the same. The sets of time-domain symbols corresponding to different PRS selection units may be different. The terminal detects a PRS signal in each PRS selection unit in the PRS receiving region to see if another communication node occupies the PRS selection unit. The PRS transmitting region and the PRS receiving region may overlap or partially overlap, or even be a region, called the PRS region, where the terminal either transmits a PRS signal in the PRS region or receives a PRS signal in the PRS region. The terminal receives the RPS signal only in the PRS region or in the PRS receiving region. The above PRS region includes a PRS transmitting region and/or a PRS receiving region.

In one example, the first communication node may be configured with a PRS transmitting region and a PRS receiving region, i.e., the region in which a communication node receives PRS and the region in which it transmits PRS may be different. The PRS transmitting region includes a PRS selection unit to which a communication node may transmit PRS signal, and the PRS receiving region includes a PRS selection unit to which a communication node receives PRS signal.

In one example, there are F categories of sub-channels in the data region, F being a positive integer greater than 1, and the F categories of sub-channels correspond to different numbers of frequency-domain resources and/or different time-domain symbols, and furthermore, the F categories of sub-channels correspond to the same data channel pool, i.e., a TX pool or a Rx pool of FIG. 2.

Furthermore, the first communication node may determine, based on whether there is a PRS region in a slot, which category of the sub-channel to which the data region in the slot corresponds in the F categories of sub-channels. For example, in a data region without a PRS region, the data sub-channel includes G PRBs and H time-domain symbols, whereas in a data region with a PRS region, the data sub-channel includes G1 PRBs and H1 time-domain symbols, and preferably G is less than G1 and H is greater than H1.

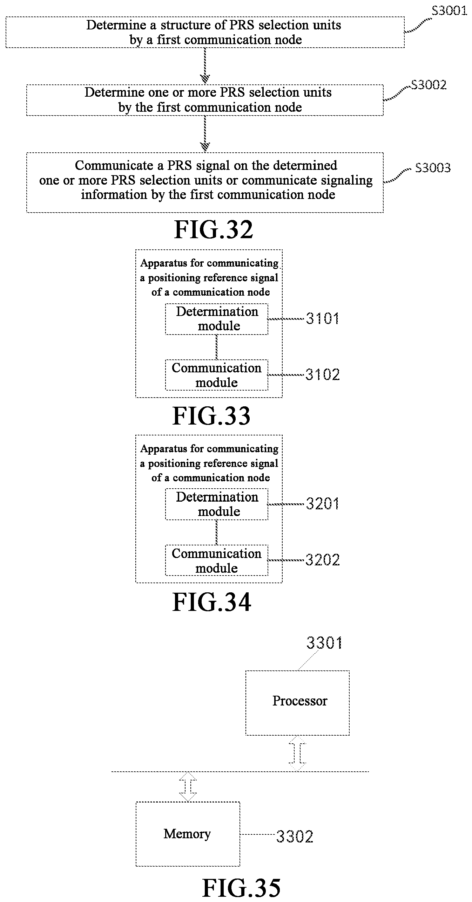

FIG. 32 shows a flowchart of a method of communicating a positioning reference signal of a communication node provided by embodiments of the present application, which may be applied in a communication link scenario between two communication nodes, which may include a communication link between a terminal and another terminal with scheduling capability, or a terminal and a base station. Furthermore, the communication link may include a Sidelink link. As shown in FIG. 32, the method includes:

S3001, the first communication node determines a structure of PRS selection units.

The first communication node in S3001 is a terminal node that communicates with the above terminal or base station having scheduling capability.

For example, the first communication node in S3001 determines the structure of the PRS selection units based on at least one of the following parameters, which include: a number of frequency-domain resource blocks PRBs corresponding to the PRS selection units; a number of time-domain symbols corresponding to the PRS selection units; a pattern of the PRS signal corresponding to the PRS selection units; and a subcarrier position occupied by the PRS selection units in each corresponding time-domain symbol in each of its corresponding resource blocks.

S3002, the first communication node determines one or more PRS selection units.

For example, implementations of S3002 may include one of the following: the first communication node determining available PRS selection units among a set of candidate PRS selection units based on the structure of the PRS selection units, determining one or more PRS selection units among the determined available PRS selection units; the first communication node transmitting a PRS signal on the determined one or more PRS selection units, the determined one or more PRS selection units including a PRS selection unit on which the first communication node transmits the PRS signal; the determined one or more PRS selection units include a PRS selection unit reserved by the first communication node; the determined one or more PRS selection units including a PRS selection unit selected by a second communication node; the first communication node receiving the twelfth signaling information, determining the PRS selection unit selected by the second communication node based on the twelfth signaling information, and the first communication node receiving a PRS signal transmitted by the second communication node on the PRS selection unit selected by the second communication node.

S3003, the first communication node communicates a PRS signal on the determined one or more PRS selection units or communicates a twelfth signaling information.

The above communicating includes transmitting and/or receiving, and the twelfth signaling information includes information of the determined one or more PRS selection units.

In one example, the above determining the available PRS selection units among the set of candidate PRS selection units includes one of the following: the first communication node receiving a thirteenth signaling information, determining PRS selection units selected by the second communication node based on the thirteenth signaling information, and the first communication node determining unavailable PRS selection units among the candidate PRS selection units based on the PRS selection units selected by the second communication node; the first communication node detecting fourteenth signaling information in a predetermined time window, determining a PRS selection unit selected by the second communication node based on the detected fourteenth signaling information, and the first communication node determining a PRS selection unit unavailable in the candidate PRS selection units based on the PRS selection unit selected by the second communication node.

The first communication node detecting the fourteenth signaling information in a predetermined time window includes at least one of the following: the first communication node respectively detecting the fourteenth signaling information in each control channel detection occasion of the predetermined window; there is a correspondence relationship between the predetermined time window and the set of candidate PRS selection units, the fourteenth signaling information including one or more signaling information; the first communication node respectively detecting the fourteenth signaling information in each control channel detection occasion of control channel detection occasions of the predetermined window that satisfies a predetermined feature.

Optionally, the control channel in embodiments of the present application may satisfy at least one of the following conditions that: the control channel detection occasion occurs periodically in the predetermined window; a set of slots corresponding to the control channel detection occasions is a subset of the set of slots corresponding to the predetermined window; the control channel detection occasion is located in a predetermined region in the predetermined window.

The predetermined region satisfies at least one of the following features that: the predetermined region belongs to a PRS region; the predetermined region does not include a data region.

The above PRS selection unit satisfies at least one of the following that: a PRS signal occupies one or more PRS selection units; in the case that a PRS signal occupies a plurality of PRS selection units, the plurality of PRS selection units occupied by the PRS signal would correspond to the same time-domain symbol; a PRS selection unit only corresponds to a PRS signal; there are multiple categories of PRS selection units, where different categories of PRS selection units correspond to at least one of the following parameters differently: a time-domain symbol, a number of REs occupied in a PRB, a number of corresponding frequency-domain resource blocks, and a pattern of the PRS signal; a PRB corresponds to a plurality of PRS selection units in a slot; a slot corresponds to a plurality of PRS selection units; a PRS selection unit corresponds to B PRBs and K time-domain symbols; a PRS selection unit includes I REs in each of the B PRBs on each of the K time-domain symbols; a PRS selection unit occupies different subcarrier positions on different time-domain symbols in its corresponding K time-domain symbols; a PRS selection unit occupies a total number of I*K REs in each PRB of the K time-domain symbols, where I*K is equal to 12; a PRS selection unit is a basic unit for scheduling PRS signal; a PRS selection unit includes a control channel region and a PRS region; a first time-domain symbol of a PRS selection unit includes a repeat transmission of a signal in a second time-domain symbol in the PRS selection unit; two categories of PRS selection units in the PRS region, where a control channel is communicated in a first category of PRS selection unit and a PRS signal is communicated in a second category of PRS selection unit; the PRS selection units and the data selection units have different structures; where B, K are positive integers greater than or equal to 1, and I is an integer or fraction less than 12.

The PRS selection units and the data selection units having different structures includes at least one of the following: respectively determining parameters of the PRS selection units and the parameters of the data selection units based on signaling information; a PRB corresponds to a data selection unit on the same time-domain symbol; a PRB corresponds to one or more PRS selection units on the same time-domain symbol; a slot corresponds to a data selection unit in time-domain; a slot corresponds to one or more PRS selection units in time-domain; data selection units in a slot are frequency division multiplexed; PRS selection units in a slot are time division multiplexed and/or frequency division multiplexed; a data selection unit includes all subcarriers in each of H PRBs, H is a positive integer greater than or equal to 1; a PRS selection unit includes a portion of the time-domain symbols in each of the B PRBs, B is a positive integer greater than or equal to 1; signals in a data channel being are communicated in one or more data selection units; a PRS signal is communicated in one or more PRS selection units; a data selection unit includes D PRS selection units, where D is a positive integer greater than or equal to one; there is a multiple relationship between frequency-domain resources corresponding to a data selection unit and frequency-domain resources corresponding to a PRS selection unit; there is a multiple relationship between a time-domain resource corresponding to a data selection unit and time-domain resources corresponding to a PRS selection unit; a number of time-domain symbols corresponding to a data selection unit is equal to a number of time-domain symbols corresponding to G PRS selection units, where the number of time-domain symbols corresponding to different PRS selection units among the G PRS selection units are the same or different, where G is a positive integer greater than 1; the data selection unit is a basic scheduling unit for communicating data; the PRS selection unit is a basic scheduling unit for communicating PRS; where the data selection unit is also referred as a data sub-channel and the PRS selection unit is also referred as a PRS sub-channel.

The above multiple relationship may be understood as one of the frequency-domain resources being an integer multiple of another frequency-domain resource, such as the number of PRBs corresponding to a PRS selection unit being an integer multiple of the number of PRBs corresponding to a data selection unit, or the number of REs occupied by a data selection unit in a PRB being an integer multiple of the number of REs occupied by a PRS selection unit in a PRB. The number of time-domain symbols included in a data selection unit is the number of time-domain symbols corresponding to one or more PRS selection units.

Furthermore, the first communication node may further determine a set of candidate PRS selection units based on the communicated signaling information or a predetermined rule.

In one example, when it needs to transmit a PRS signal, a resource that can transmit a PRS signal is selected in a PRS region, a PRS signal is transmitted in the selected resource, and of course a PRS signal and a PSCCH can be transmitted on the selected resource; it includes Q PRS selection units in a PRS region, and each selection unit may also be referred as a PRS sub-channel. The PRS selection unit may also be referred as a PRS scheduling unit. APRS signal occupies one or more PRS selection units, and the PRS signal is transmitted in a plurality of consecutive PRS selection units. A PRS sub-channel corresponds to I REs in each of H PRBs in the frequency-domain and occupies K time-domain symbols in the time-domain symbols, where I is an integer less than or equal to 12, e.g., I is {6, 3, 1, 1/2, 1/3}, and I being less than 1 indicates that the PRS sub-channel occupies a RE in every 1/I PRBs, or it indicates that the density of a PRS sub-channel in the frequency-domain is I, where K is a positive integer, K is less than or equal to the number of time-domain symbols included in the PRS region, or K is less than or equal to the number of time-domain symbols included in the PRS region in a slot, or K may take the value of the number of time-domain symbols corresponding to a second PRS unit in the case of sub-channels of a data region with F categories, or K is the number of time-domain symbols corresponding to a PRS in a second PRS unit. As shown in FIG. 29, B consecutive PRBs in the 2 time-domain symbols occupied by each second PRS unit constitute C PRS selection units. Optionally, C is the number of subcarriers, and C is 2 in FIG. 29, i.e., it is unit1 and unit2 in FIG. 29. If the total frequency-domain resources corresponding to the second PRS unit include A PRBs, then there are total of

$$2*\lceil A/B \rceil 2* \text{ (or } 2*\lfloor A/B \rfloor \text{)}$$ PRS selection units on each second PRS unit. In a slot in FIG. 29, there are total of 5 second PRS units, so there are total of $10*\lceil A/B \rceil$

(or $10*\lfloor A/B \rfloor$) PRS selection units. Alternatively, it can further be specified that all frequency-domain resources corresponding to the second PRS unit are frequency-domain resources corresponding to a PRS selection unit, such that a second PRS unit in FIG. 29 corresponds to 2 PRS selection units, and a slot corresponds to 10 PRS selection units. A PRS signal, if to be transmitted, is transmitted in one or more PRS selection units in a second PRS unit. PRS selection units occupied as well as reserved by a transmitting end may further be indicated in the PSCCH.

The occupied selection unit as well as the reserved PRS selection unit by the PRS signal may be notified by a PSCCH, which may occupy different time-domain symbols from the PRS signal, as shown in FIG. 28, and may further occupy resources in the PRS selection unit. For example, resources in the starting few PRBs in each unit of FIG. 29 may be occupied by the PSCCH, and this PSCCH may include information for scheduling the PRSs in this PRS selection unit. Alternatively, the PSCCH and PRS signal occupy different PRS selection units in FIG. 29 respectively, such as unit 1 for PSCCH transmitting and unit 2 for PRS signal transmitting.

Optionally, it is determined that a PRS selection unit is occupied by other transmitting end and needs to be excluded from the candidate resource region and cannot be used as a currently selectable resource based on a determination condition that includes a received power RSR of the PRS signal on the PRS selection unit being higher than a predetermined value.

Furthermore, each of the PRS signal and the data channel selects an available resource in its respective region, a resource is selected in the PRS region when a PRS needs to be transmitted, the PRS signal is transmitted on the selected resource, and of course the PRS signal and the PSCCH can further be transmitted on the selected resource. When it needs to transmit the data channel PSSCH, the available resource is selected only in the data region, the PSSCH is transmitted on the selected resource, and of course the PSSCH and PSCCH can further be transmitted on the selected resource. The compositions of the PRS selection unit corresponding to the PRS region (which can also be referred as the selection unit) and the data selection unit corresponding to the data region (which can also be referred as the data channel region, the control channel region) are independent and different. For example, a PRS selection unit in the PRS region corresponds to I RE resources in each of B consecutive PRBs in the frequency-domain, a PRS selection unit corresponds to P time-domain symbols in the time-domain, the number of time-domain symbols corresponding to a slot is greater than or equal to time-domain symbols corresponding to the PRS selection unit, and a slot includes one or more PRS selection units in the time-domain, whereas a data selection unit corresponds to 12 REs in each of D consecutive PRBs in the frequency-domain, and corresponds to E time-domain symbols in the time-domain, and the granularity of the data selection unit is a slot. It may include frequency-domain resources corresponding to multiple PRS selection units in a PRB, while it may only include frequency-domain resources corresponding to a data selection unit in a PRB. Different PRS selection units in a slot may be time-division and/or frequency-division, while different data selection units in a slot may only be frequency-division. The set of time-domain symbols corresponding to different data selection units is the same. The sets of time-domain symbols corresponding to different PRS selection units may be different.

FIG. 33 shows an apparatus for communicating positioning reference signal of a communication node provided by embodiments of the present application, including: a determination module 3101, a communication module 3102; the determination module is used for determining a PRS region; the communication module is used for communicating a PRS signal in the PRS region; where the communicating includes transmitting and/or receiving.

In one example, the determination module determining the PRS region includes at least one of the following: the communication apparatus receiving a first signaling information transmitted by a second communication node, the determination module determining the PRS region based on the first signaling information; the determining module determining the PRS region; the communication apparatus transmitting a second signaling information to a third communication node, where the second signaling information includes parameters of the determined PRS region; the determination module determining the PRS region based on predetermined parameters.

The first signaling information or the second signaling information or the predetermined parameters include at least one of the following parameters corresponding to the PRS region: a PRS signal period, a set of time-domain symbols corresponding to the PRS in a slot, a number of first time units L included in a first PRS unit, an interval between two consecutive first PRS units in a PRS signal period, a number of first PRS units included in a PRS signal period, X second time units at a start position of a first PRS unit, Y second time units at an end position of a first PRS unit, a number of second PRS units included in a first PRS unit, a set of physical resource block PRBs corresponding to the PRS region, a set of slots corresponding to the PRS region, a location of a second PRS unit in a slot, a number of second PRS units in a slot, parameters of a PRS selection unit, a PRS signal resource list, and parameters of a control channel, where the control channel is associated with the PRS region. For example, the control channel is in the PRS region, or the control channel is in the slot where the PRS is located, or the control channel schedules the PRS signal. Optionally, the parameters of the control channel associated with the PRS region and the parameters of the control channel associated with the data region are independent, are determined respectively, and may be different. The parameters of the control channel include a number of information bits included in the control channel, a number of time-domain symbols occupied by the control channel, a number of PRBs occupied by the control channel, and the control channel includes a Sidelink control channel, and/or a Sidelink feedback channel.

The second time unit satisfies at least one of the following features that: the first communication node does not communicate a signal in the second time unit; the first communication node performs RF parameter adjustment in the second time unit, for example, adjusting the RF bandwidth; the first communication node determines whether to communicate a signal in the second time unit based on a third signaling information or a preset rule; the second time unit and the first PRS unit are located at different time-domain locations, and the first PRS unit includes the second time unit.

The above X and/or Y may be obtained based on at least one of the following information: a relationship between a bandwidth of a data region and a bandwidth of the PRS region; a relationship between a center carrier frequency of a data region and a center carrier frequency of the PRS region; a relationship between a subcarrier spacing of a data region and a subcarrier spacing of the PRS region; the capability information of the first communication node; capability information of the third communication node, where the third communication node is a node that receives the signal transmitted by the first communication node; the received fourth signaling information transmitted by the second communication node.

The first time unit and/or the second time unit includes one of the following: a slot, an orthogonal frequency division multiplexing OFDM time-domain symbol.

Optionally, the PRS region includes at least one of the following: the PRS region including one or more second PRS units; the PRS region including one or more slots; the PRS region including one or more time-domain symbols in a slot.

In one example, the communication module communicating a PRS signal in the PRS region including at least one of the following: the communication module transmitting a PRS signal in one or more PRS selection units in the PRS region; the communication module detecting a PRS signal in each PRS selection unit of the PRS region; the communication module selecting, among a plurality of PRS selection units in the PRS region, one or more PRS selection units, and transmitting a PRS signal in the selected PRS selection units; the communication module determining, among a set of candidate PRS selection units in the PRS region, one or more PRS selection units, and transmitting a fifth signaling information on the determined PRS selection units, where the fifth signaling information includes information of the one or more PRS selection units determined by the first communication node, and the determined one or more PRS selection units include a PRS selection units for communicating a PRS signal and/or reserved PRS selection units for communicating the PRS signal; the communication module transmitting the PRS signal only in one or more resources in the PRS region; the communication module determining available PRS selection units among a set of candidate PRS selection units in the PRS region, determining one or more PRS selection units among the determined available PRS selection units, and transmitting a sixth signaling information of the determined PRS selection units, the sixth signaling information includes information of the determined one or more PRS selection units, and the determined one or more PRS selection units include PRS selection units for transmitting the PRS signal and/or a reserved PRS selection unit; the communication module determining available PRS selection units among a set of candidate PRS selection units in the PRS region, and determining one or more PRS selection units among the determined available PRS selection units, and transmitting the PRS signal in the determined PRS selection units.

In one example, the determination module determining the PRS region may include at least one of the following: the determination module determining that the PRS region and a data region are regions independent of each other; the determination module determining that the PRS region does not include resources corresponding to the data region; the determination module determining that the data region does not include resources corresponding to the PRS region; the determination module determining that a frequency-domain bandwidth corresponding to the PRS region is greater than a frequency-domain bandwidth corresponding to the data region; the determination module determining that there is a gap between the PRS region and the data region, where the gap includes a time-domain gap and a frequency-domain gap, and the above communication apparatus does not transmit signals on the gap; the determination module determining that the frequency-domain bandwidth corresponding to the PRS region is an integer multiple of the frequency-domain bandwidth corresponding to the data region; the determination module determining resources available for communicating data based on the resources corresponding to the PRS region; the determination module determining resources available for communicating the PRS signal based on resources corresponding to the data region.

The PRS region and the data region being independent of each other includes one of the following that: the PRS region and the data region correspond to different slots respectively; the PRS region and the data region correspond to different time-domain symbols of a slot respectively; the PRS region and the data region correspond to different frequency-domain resources respectively; and the PRS region and the data region correspond to different frequency-domain resource blocks PRBs respectively.

For example, the determination module may determine resources available for transmitting data in a set of candidate resources based on the PRS region; the determination module selects one or more resources among the determined resources for transmitting data; and the communication module transmits data on the selected one or more resources and/or transmits a seventh signaling information, where the seventh signaling information includes the selected one or more resources.

Optionally, the communication module is further used to implement at least one of the following functions: communicating data and/or control channel in the data region; not communicating data in the PRS region; not communicating a PRS signal in the data region; communicating the PRS signal and/or control channel in the PRS region.

Optionally, the determination module is used to determine resources available for transmitting the PRS signal in the set of candidate resources based on the data region; the determination module selects one or more resources in the determined resources for transmitting the PRS signal; the communication module transmits the PRS on the selected resources and/or transmits an eighth signaling information, where the eighth signaling information includes information of the selected resources.

The above PRS region and data region being independent of each other further includes one of the following that: the PRS region and the data region correspond to different carrier frequency configuration structures respectively; the PRS region and the data region correspond to different bandwidth parts BWPs configuration structure within a carrier frequency configuration structure respectively; the PRS region and the data region correspond to different resource pools in a BWP configuration structure respectively; the PRS region and the data region correspond to different configuration parameters in a resource pool respectively; predetermined conditions need to be satisfied between a parameter corresponding to the PRS region and the parameters corresponding to the data region.

The data region corresponds to data selection units, the PRS region corresponds to PRS selection units, and the data selection units and the PRS selection units have different structures.

For example, the PRB and the slot further include at least one of the following features that: a PRB corresponding to a data selection unit on the same time-domain symbol; a PRB corresponds to one or more PRS selection units on the same time-domain symbol; a slot corresponds to a data selection unit in the time-domain; a slot corresponds to one or more PRS selection units in time-domain; data selection units in a slot are frequency division multiplexed; PRS selection units in a slot are time division multiplexed and/or frequency division multiplexed; a data selection unit includes all subcarriers in each of H PRBs, where H is a positive integer greater than or equal to 1; a PRS selection unit includes a portion of subcarriers in each of B PRBs, where B is a positive integer greater than or equal to 1; signals in a data channel are communicated in one or more data selection units; a PRS signal is communicated in one or more PRS selection units; a data selection unit includes D PRS selection units, where D is a positive integer greater than or equal to 1; there is a multiple relationship between frequency-domain resources corresponding to a data selection unit and frequency-domain resource corresponding to a PRS selection unit; there is a multiple relationship between time-domain resources corresponding to a data selection unit and time-domain resources corresponding to a PRS selection unit; a number of time-domain symbols corresponding to a data selection unit is equal to a number of time-domain symbols corresponding to G PRS selection units, where the number of time-domain symbols corresponding to different PRS selection units among the G PRS selection units are the same or different, where G is a positive integer greater than 1; based on a parameter signaling information, parameters of the PRS selection unit and parameters of the data selection unit are determined respectively; the data selection unit is a basic scheduling unit for communicating data; and the PRS selection unit is a basic scheduling unit for communicating PRS; where the data selection unit is also referred as a sub-channel, and the PRS selection unit is also referred as a PRS sub-channel.

For example, the determination module is further used to determine F categories of data selection units in the data region, where F is a positive integer greater than 1.

The F categories of data selection units further includes at least one of the following features that: the F categories of data selection units correspond to F categories of slots; the F categories of data selection units include different numbers of frequency-domain resource blocks; the F categories of data selection units include different numbers of time-domain symbols.

The F categories of slots include a slot with a PRS region and a slot without any PRS region.

Optionally, the determination module is further used to determine a category of data selection units corresponding to a slot based on resource condition corresponding to a PRS region included in the slot; the category of the data selection unit is associated with whether a PRS region is configured in a slot.

The determination module further has at least one of the following functions: determining a structure of a slot based on the PRS region; determining a structure of a slot based on whether the PRS region is included in the slot; determining a structure of a slot, where the PRS region is included in the slot.

The structure of a slot includes one of the following that: the slot includes the PRS region and a feedback channel region; the slot includes PRS time-domain symbols and not includes data time-domain symbols; the slot includes a control channel region and a PRS region; where the PRS region includes the PRS time-domain symbols.

The slot includes the PRS region and the feedback channel region includes at least one of the following that: the slot includes PRS time-domain symbols and feedback channel time-domain symbols; the PRS region and the feedback channel region are located in different time-domain symbols; the time-domain symbols in which the PRS region is located are in front of the time-domain symbols in which the feedback channel region is located; there is a GAP time-domain symbol and/or a power adjusted AGC time-domain symbol between the time-domain symbols in which the PRS region is located and the time-domain symbols in which the feedback channel region is located; a first time-domain symbol in the PRS region includes a repetition of the signal on a second time-domain symbol in the PRS time-domain symbols; there is an association relationship between the time-domain symbols in which the PRS region is located and the time-domain symbols in which the feedback channel region is located; there is an association relationship between a PRS selection unit in the PRS region and a feedback channel in the feedback channel region; there is an association relationship between a PRS selection unit in the PRS region and a feedback channel selection unit in the feedback channel region.

A feedback channel transmitted in the feedback channel region includes at least one of the following information: an Acknowledgement ACK information or a Negative Acknowledgement NACK information corresponding to a data channel, a measurement result obtained based on a channel state information reference signal CSI-RS, and positioning measurement information obtained based on the PRS.

The slot including a control channel region and a PRS region includes at least one of the following features that: the control channel region and the PRS region are located in different time-domain symbols; the control channel region and the PRS region are adjacent, and there is no GAP time-domain symbols and/or AGC time-domain symbols between the control channel region and the PRS region; the control channel region and the PRS region correspond to different PRBs or different PRS selection sub-units or different resource elements REs.

For example, the PRS region further includes at least one of the following that: the PRS region includes one or more PRS selection units; the PRS region includes one or more second PRS units in a slot; the PRS region includes one or more PRS selection units in a slot.

The second PRS unit satisfies at least one of the following features that: the signal transmitted in a first time-domain symbol of each second PRS unit is a repetition of a signal transmitted in a second time-domain symbol; the first time-domain symbol of each second PRS unit is an AGC time-domain symbol; there is a gap between the two second PRS units, where the gap includes one or more time-domain symbols; a resource occupied by a PRS signal belongs to a second PRS unit; a number of time-domain symbols occupied by a PRS signal is equal to a number of time-domain symbols corresponding to a second PRS unit; a second PRS unit includes one or more PRS selection units; there are at least two categories of second PRS units; a second PRS unit includes one or more PRS selection units in the frequency-domain; the second PRS unit contains P time-domain symbols, P is an integer greater than 0; a slot includes one or more second PRS units.

In one example, different categories of second PRS units of at least two categories of second PRS units correspond to different numbers of time-domain symbols; each category of the at least two categories of second PRS units corresponds to a PRS pattern respectively, where the PRS pattern includes time-domain symbols and subcarriers occupied by the PRS signal.

The above resource includes one of the following: a slot, a time-domain symbol in a slot, a set of physical resource blocks, a subcarrier, a selection unit; where the selection unit includes a PRS selection unit or a data selection unit.

Optionally, the PRS selection unit satisfies at least one of the following features that: a PRS signal occupies one or more PRS selection units; in the case that a PRS signal occupies a plurality of PRS selection units, the plurality of PRS selection units occupied by a PRS signal correspond to the same time-domain symbol; a PRS selection unit only corresponds to a PRS signal; there are multiple categories of PRS selection units, where different categories of PRS selection units correspond to at least one of the following parameters differently: a time-domain symbol, a number of REs occupied in a PRB, a number of corresponding frequency-domain resource blocks; a PRB corresponds to a plurality of PRS selection units; a slot corresponds to a plurality of PRS selection units; a PRS selection unit corresponds to B PRBs and K time-domain symbols; a PRS selection unit includes I REs in each of the B PRBs on each of the K time-domain symbols; a PRS selection unit occupies different subcarrier positions on different time-domain symbols in its corresponding K time-domain symbols; a PRS selection unit is a basic unit for scheduling a PRS signal by the control channel; a PRS selection unit including a control channel region and a PRS region; a first time-domain symbol of a PRS selection unit includes a repeat transmission of a signal in a second time-domain symbol in a PRS selection unit; the PRS selection unit is a scheduling unit for the PRS signal; where B and K are positive integers greater than or equal to 1, and I is an integer or fraction less than 12.

The PRS region corresponds to one of the following: a carrier frequency configuration structure, a bandwidth part BWP configuration structure, a resource pool configuration structure, a set of configuration parameters in a resource pool.

In one example, the determination module is further used to determine at least one of the following parameters corresponding to the PRS region based on a ninth signaling information or a predetermined rule: a PRS signal resource list, a physical control channel, a time-domain parameters, a set of PRBs corresponding to the PRS region, parameters of the PRS selection unit, a number of PRS selection units included in the PRS region, parameters for determining available PRS selection units in the PRS region, and PRS pattern information.

The communication module communicating the PRS signal in the PRS region satisfies at least one of the following features that: a PRS signal occupies one or more PRS selection units in the PRS region; on a time-domain symbol, a PRS signal occupies a subcarrier every C subcarriers in a set of frequency-domain resource blocks to which the PRS signal corresponds, where C is greater than 12 or C belongs to any one of the following parameters {2, 4, 12, 8, 24, 9, 36}; where a PRS signal corresponds to a PRS signal resource.

In one example, the determination module determines at least one of the following parameters corresponding to a PRS signal resource based on a tenth signaling information or the predetermined rule: pattern information of the PRS signal, a number of PRBs occupied by the PRS signal, positions of the PRBs occupied by the PRS signal, time-domain symbol positions occupied by the PRS signal in a slot, a number of time-domain symbols occupied by the PRS signal in a slot, a number of PRS selection units occupied by the PRS signal, positions of the selection units occupied by the PRS signal, transmit power for the PRS signal, and pattern selection information of the PRS signal, where the pattern information of the PRS signal includes RE positions occupied by the PRS signal in a PRB, and a subcarrier offset corresponding to a PRS pattern.

Optionally, the communication module is used to transmit the ninth signaling information and/or the tenth signaling information; where the communicating includes transmitting or receiving.

The determination module may be used to detect an eleventh signaling information in a control channel detection occasion of a predetermined time window; to determine PRS selection units selected by a second communication node based on the detected eleventh signaling information; and to determine unavailable PRS selection units among the set of candidate PRS selection units based on the PRS selection units selected by the second communication node.

Detecting the eleventh signaling information in the predetermined time window includes at least one of the following: respectively detecting the eleventh signaling information in each control channel detection occasion of the predetermined window; respectively detecting the eleventh signaling information in each control channel detection occasion of the predetermined window that satisfies a predetermined feature; where there is a correspondence relationship between the predetermined time window and the set of candidate PRS selection units, and the eleventh signaling information includes one or more signaling information.

An apparatus of transmitting a positioning reference signal of a communication node provided in the present embodiment is used to implement the method of communicating the positioning reference signal of the communication node of the embodiment shown in FIG. 1, and implementing principles and technical effects thereof are similar and will not be repeated herein.

FIG. 34 shows an apparatus for communicating positioning reference signal of a communication node provided by embodiments of the present application, as shown in FIG. 32, including: a determination module 3201, a communication module 3202; the determination module is used for determining a structure of PRS selection units; the determination module is further used for determining one or more PRS selection units; the communication module, including a first communication unit and a second communication unit, the first communication unit is used for communicating a PRS signal on the determined one or more PRS selection units, and/or, the second communication unit is used for communicating a twelfth signaling information; where the communicating includes transmitting and/or receiving, the twelfth signaling information includes information of the determined one or more PRS selection units.

Specifically, the determination module is used to determine the structure of the PRS selection units based on at least one of the following parameters, the parameters include: a number of frequency-domain resource blocks PRBs corresponding to the PRS selection units; a number of time-domain symbols corresponding to the PRS selection units; a pattern of the PRS signal corresponding to the PRS selection units; and a subcarrier position occupied by the PRS selection units in each corresponding time-domain symbol in each of its corresponding resource blocks.

The determination module determines one or more PRS selection units, including one of the following: determining available PRS selection units among a set of candidate PRS selection units based on the structure of the PRS selection units, determining one or more PRS selection units among the determined available PRS selection units; the communication module transmitting a PRS signal on the determined one or more PRS selection units; the determined one or more PRS selection units including a PRS selection units on which the communication apparatus transmits the PRS signal; the determined one or more PRS selection units including a PRS selection units reserved by the communication apparatus; the determined one or more PRS selection units including a PRS selection unit selected by a second communication node; the communication module receiving the twelfth signaling information, the determination module determining the PRS selection unit selected by the second communication node based on the twelfth signaling information, and the communication module receiving a PRS signal transmitted by the second communication node on the PRS selection unit selected by the second communication node.

Determining the available PRS selection units among the set of candidate PRS selection units includes one of the following: the communication module receiving a thirteenth signaling information, the determination module determining PRS selection units selected by the second communication node based on the thirteenth signaling information, and the first communication node determination module determining unavailable PRS selection units among the candidate PRS selection units based on the PRS selection units selected by the second communication node; the communication unit detecting fourteenth signaling information in a predetermined time window, determining a PRS selection unit selected by the second communication node based on the detected fourteenth signaling information, and the determination module determining a PRS selection unit unavailable in the candidate PRS selection unit based on the PRS selection unit selected by the second communication node.

Detecting the fourteenth signaling information in a predetermined time window includes at least one of the following: respectively detecting the fourteenth signaling information in each control channel detection occasion of the predetermined window; there is a correspondence relationship between the predetermined time window and the set of candidate PRS selection units, and the fourteenth signaling information including one or more signaling information; the fourteenth signaling information being detected respectively in each control channel detection occasion of control channel detection occasions of the predetermined window that satisfies a predetermined feature.

The above control channel further includes at least one of the following features that: the control channel detection occasion occurs periodically in the predetermined window; a set of slots corresponding to the control channel detection occasion is a subset of the set of slots corresponding to the predetermined window; the control channel detection occasion is located in a predetermined region in the predetermined window.

The predetermined region satisfies at least one of the following features that: the predetermined region belongs to a PRS region; the predetermined region does not include a data region.

The PRS selection unit satisfies at least one of the following that: a PRS signal occupies one or more PRS selection units; in the case that a PRS signal occupies a plurality of PRS selection units, the plurality of PRS selection units occupied by a PRS signal corresponding to the same time-domain symbol; a PRS selection unit only corresponds to a PRS signal; there are multiple categories of PRS selection units, where different categories of PRS selection units correspond to at least one of the following parameters differently: a time-domain symbol, a number of REs occupied in a PRB, a number of corresponding frequency-domain resource blocks, and a pattern of the PRS signal; a PRB corresponds to a plurality of PRS selection units in a slot; a slot corresponds to a plurality of PRS selection units; a PRS selection unit corresponds to B PRBs and K time-domain symbols; a PRS selection unit includes I REs in each of the B PRBs on each of the K time-domain symbols; a PRS selection unit occupies a total number of I*K REs in each PRB of the K time-domain symbols, where I*K is equal to 12; a PRS selection unit occupies different subcarrier positions on different time-domain symbols in its corresponding K time-domain symbols; a PRS selection unit is a basic unit for scheduling PRS signal; a PRS selection unit includes a control channel region and a PRS region; a first time-domain symbol of a PRS selection unit includes a repeat transmission of a signal in a second time-domain symbol in a PRS selection unit; two categories of PRS selection units in the PRS region, where a control channel is communicated in a first category of PRS selection unit and a PRS signal is communicated in a second category of PRS selection unit; the PRS selection unit is further a scheduling unit for the PRS signal; the PRS selection units and the data selection units have different structures; where B, K are integers greater than or equal to 1, and I is an integer or fraction less than 12.

The PRS selection units and the data selection units having different structures includes at least one of the following: respectively determining parameters of the PRS selection units and the parameters of the data selection units based on signaling information; a PRB corresponds to a data selection unit on the same time-domain symbol; a PRB corresponds to one or more PRS selection units on the same time-domain symbol; a slot corresponds to a data selection unit in time-domain; a slot corresponds to one or more PRS selection units in time-domain; data selection units in a slot are frequency division multiplexed; PRS selection units in a slot are time division multiplexed and/or frequency division multiplexed; a data selection unit includes all subcarriers in each RPB of H PRBs, H is a positive integer greater than or equal to 1; a PRS selection unit includes a portion of the time-domain symbols in each of the B PRBs, B is a positive integer greater than or equal to 1; signals in a data channel are communicated in one or more data selection units; a PRS signal being is communicated in one or more PRS selection units; a data selection unit includes D PRS selection units, where D is a positive integer greater than or equal to 1; there is a multiple relationship between frequency-domain resources corresponding to a data selection unit and frequency-domain resources corresponding to a PRS selection unit; there is a multiple relationship between a time-domain resources corresponding to a data selection unit and time-domain resources corresponding to a PRS selection unit; a number of time-domain symbols corresponding to a data selection unit is equal to a number of time-domain symbols corresponding to G PRS selection units, where the number of time-domain symbols corresponding to different PRS selection units among the G PRS selection units are the same or different, where G is a positive integer greater than 1; the data selection unit is a basic scheduling unit for communicating data; the PRS selection unit is a basic scheduling unit for communicating PRS.

In one example, a determination module is used to determine a set of candidate PRS selection units based on the communicated signaling information or a predetermined rule.

An apparatus for communicating positioning reference signal of a communication node provided by the present embodiment is used to implement the method for communicating the positioning reference signal of the communication node of the embodiment shown in FIG. 30, which is similar in its implementation principle and technical effect, and will not be repeated herein.

FIG. 35 shows a schematic diagram of a structure of a communication node provided by an embodiment, as shown in FIG. 35, the node includes a processor 3501 and a memory 3502; the number of the processors 3501 in the node may be one or multiple, and one processor 3501 is taken as an example in FIG. 35; the processors 3501 and the memory 3502 in the node may be connected by a bus or otherwise, and connection by a bus is taken as an example in FIG. 35.

The memory 3502 serves as a computer-readable storage medium that can be used to store software programs, computer-executable programs, and modules, such as program instructions/modules corresponding to the processing methods in the embodiments of FIG. 1 or FIG. 33 of the present application (e.g., the determination module 3201, the communication module 3202 in the positioning reference signal communication apparatus of the communication node). The processor 3501 implements the above method for communicating the positioning reference signal of the communication node by running the software programs, instructions, and modules stored in the memory 3502.

The memory 3502 may mainly include a storage program region and a storage data region, where the storage program region may store an operating system, an application program required for at least one function, and the storage data region may store data created in accordance with the use of a set-top box, and the like. In addition, the memory 3502 may include a high-speed random-access memory and may also include a non-volatile memory, such as at least one disk memory device, a flash memory device, or other non-volatile solid-state memory device.

In one example, in case of possible, the processor in the above node may also implement the above method for transmitting a positioning reference signal of a communication node by means of hardware circuits such as logic circuits, gate circuits, and the like within the processor.

Embodiments of the present application also provide a read-writable storage medium for computer storage, the storage medium storing one or more programs, the one or more programs being executable by the one or more processors to execute the method for transmitting a positioning reference signal of the communication node in the above embodiment.

It will be understood by one of ordinary skill in the art that all or some of the steps in the method disclosed above, the functional modules/units in the device may be implemented as software, firmware, hardware, and suitable combinations thereof.

In hardware implementations, the division between functional modules/units referred to in the above description does not necessarily correspond to the division of physical components; for example, one physical component may have multiple functions, or one function or step may be cooperatively performed by several physical components. Some or all of the physical components may be implemented as software executed by a processor, such as a central processor, a digital signal processor, or a microprocessor, or as hardware, or as integrated circuits, such as specialized integrated circuits. Such software may be distributed on a computer-readable medium, which may include a computer storage medium (or non-transitory medium) and a communication medium (or transitory medium). As is well known to those of ordinary skill in the art, the term computer storage medium includes volatile and non-volatile, removable and non-removable media implemented in any method or technique for storing information, such as computer-readable instructions, data structures, program modules, or other data. The computer storage medium include, but are not limited to, RAM, ROM, EEPROM, flash memory or other memory technology, CD-ROM, Digital Versatile Disk (DVD) or other optical disk storage, magnetic cartridges, magnetic tapes, magnetic disk storage, or other magnetic storage devices, or any other medium that can be used to store desired information and that can be accessed by a computer. In addition, it is well known to those of ordinary skill in the art that communication medium typically contain computer-readable instructions, data structures, program modules, or other data in a modulated data signal such as a carrier wave or other transmission mechanism, and may include any information delivery medium.

**Claims**

1. A method for communicating a positioning reference signal of a communication node, comprising:

   determining a positioning reference signal PRS region by a first communication node; and
   communicating a PRS signal in the PRS region by the first communication node;
   wherein the communicating comprises transmitting and/or receiving.

2. The method according to claim 1, wherein determining the PRS region by the first communication node comprises at least one of the following:

   receiving a first signaling information transmitted from a second communication node by the first communication node, and determining the PRS region based on the first signaling information by the first communication node;
determining the PRS region by the first communication node, and transmitting a second signaling information to a third communication node by the first communication node, wherein the second signaling information comprises parameters of the determined PRS region; and
determining the PRS region based on predetermined parameters by the first communication node.

3. The method according to claim 2, wherein one of the first signaling information, the second signaling information, and the predetermined parameters comprises at least one of the following parameters corresponding to the PRS region:

   a PRS signal period, a set of time-domain symbols corresponding to a PRS in a slot, a number of first time units L included in a first PRS unit, an interval between two consecutive first PRS units in a PRS signal period, a number of first PRS units included in a PRS signal period, X second time units at a start position of a first PRS unit, Y second time units at an end position of a first PRS unit, a number of second PRS units included in a first PRS unit, a set of physical resource block PRBs corresponding to the PRS region, a set of slots corresponding to the PRS region, a position of a second PRS unit in a slot, a number of second PRS units in a slot, parameters of a PRS selection unit, a PRS signal resource list, and parameters of a control channel, wherein the control channel is associated with the PRS region;
   wherein the start position of the first PRS unit comprises: a start position within the first PRS unit, or a start position outside of the first PRS unit; and the end position of the first PRS unit comprises: an end position within the first PRS unit, or an end position outside of the first PRS unit.

4. The method according to claim 3, wherein the second time unit satisfies at least one of the following features that:

   the first communication node does not communicate a signal in the second time unit;
   the first communication node performs RF parameter adjustment in the second time unit;
   the first communication node determines whether to communicate a signal in the second time unit based on a third signaling information or a preset rule;
   the second time unit and the first PRS unit are located at different time-domain positions;
the first PRS unit includes the second time unit.

5. The method according to claim 3, wherein X and/or Y being obtained based on at least one of the following information:

a relationship between a bandwidth of a data region and a bandwidth of the PRS region;
a relationship between a center carrier frequency of a data region and a center carrier frequency of the PRS region;
a relationship between a subcarrier spacing of a data region and a subcarrier spacing of the PRS region;
capability information of the first communication node;
capability information of the third communication node, wherein the third communication node is a node that receives a signal transmitted by the first communication node;
a received fourth signaling information transmitted by the second communication node.

6. The method according to claim 3, wherein the first time unit and/or the second time unit comprise at least one of the following: a slot, an orthogonal frequency division multiplexing OFDM time-domain symbol.

7. The method according to claim 1, wherein the PRS region comprises at least one of the following:

one or more second PRS units;
one or more slots;
one or more time-domain symbols in a slot.

8. The method according to claim 1, wherein communicating the PRS signal in the PRS region by the first communication node comprises at least one of the following:

communicating a PRS signal in one or more PRS selection units in the PRS region by the first communication node;
detecting a PRS signal in each PRS selection unit of the PRS region by the first communication node;
selecting, among a plurality of PRS selection units in the PRS region, one or more PRS selection units by the first communication node, and transmitting a PRS signal in the selected one or more PRS selection units by the first communication node;
determining one or more PRS selection units among a set of candidate PRS selection units in the PRS region by the first communication node, and transmitting a fifth signaling information on the determined one or more PRS selection units by the first communication node, wherein the fifth signaling information comprises information of the one or more PRS selection units determined by the first communication node, and the determined one or more PRS selection units comprise: PRS selection units for communicating a PRS signal and/or reserved PRS selection units for communicating a PRS signal;
transmitting a PRS signal only in one or more resources in the PRS region by the first communication node;
determining available PRS selection units among a set of candidate PRS selection units in the PRS region by the first communication node, determining one or more PRS selection units among the determined available PRS selection units by the first communication node, and transmitting a sixth signaling information on the determined PRS selection units by the first communication node, the sixth signaling information comprises information of the determined one or more PRS selection units, and the determined one or more PRS selection units comprise: PRS selection units for communicating a PRS signal and/or reserved PRS selection units;
determining available PRS selection units among a set of candidate PRS selection units in the PRS region by the first communication node, and determining one or more PRS selection units among the determined available PRS selection units by the first communication node, and transmitting a PRS signal in the determined PRS selection units by the first communication node.

9. The method according to claim 1, wherein determining the PRS region by the first communication node comprises at least one of the following:

determining that the PRS region and a data region are regions independent of each other by the first communication node;
determining that the PRS region does not include resources corresponding to the data region by the first communication node;
determining that the data region does not include resources corresponding to the PRS region by the first communication node;
determining that a frequency-domain bandwidth corresponding to the PRS region is greater than a frequency-domain bandwidth corresponding to the data region by the first communication node;
determining that there is a gap between the PRS region and the data region by the first communication node;

determining that the frequency-domain bandwidth corresponding to the PRS region is an integer multiple of the frequency-domain bandwidth corresponding to the data region by the first communication node;
determining resources available for communicating data based on resources corresponding to the PRS region by the first communication node; and
determining resources available for communicating the PRS signal based on resources corresponding to the data region by the first communication node.

10. The method according to claim 9, wherein the PRS region and the data region being independent of each other comprises one of the following that:

the PRS region and the data region correspond to different slots respectively;
the PRS region and the data region correspond to different time-domain symbols of a slot respectively;
the PRS region and the data region correspond to different frequency-domain resources respectively; and
the PRS region and the data region correspond to different frequency-domain resource blocks PRBs respectively.

11. The method according to claim 9, further comprising:

determining resources available for transmitting data in a set of candidate resources based on the PRS region by the first communication node;
selecting one or more resources among the determined resources for transmitting data by the first communication node; and
transmitting data on the selected resources by the first communication node and/or transmitting a seventh signaling information by the first communication node, wherein the seventh signaling information comprises information of the selected resources.

12. The method according to claim 9, further comprising at least one of the following:

communicating data and/or control channel in the data region by the first communication node;
not communicating data in the PRS region by the first communication node;
not communicating a PRS signal in the data region by the first communication node;
communicating a PRS signal and/or control channel in the PRS region by the first communication node.

13. The method according to claim 9, further comprising:

determining resources available for transmitting the PRS signal in a set of candidate resources based on the data region by the first communication node;
selecting one or more resources among the determined resources for transmitting the PRS signal by the first communication node; and
transmitting the PRS signal on the selected resources by the first communication node and/or transmitting an eighth signaling information by the first communication node, wherein the eighth signaling information comprises information of the selected resources.

14. The method according to claim 9, further comprising one of the following features that:

the PRS region and the data region correspond to different carrier frequency configuration structures respectively;
the PRS region and the data region correspond to different bandwidth part BWP configuration structures within a carrier frequency configuration structure respectively;
the PRS region and the data region correspond to different resource pools in a BWP configuration structure respectively;
the PRS region and the data region correspond to different configuration parameters in a resource pool respectively;
predetermined conditions need to be satisfied between a parameter corresponding to the PRS region and a parameter corresponding to the data region.

15. The method according to claim 9, wherein the data region corresponds to data selection units and the PRS region corresponds to PRS selection units.

16. The method according to claim 15, wherein the data selection units and PRS selection units have different structures.

17. The method according to claim 15, further comprising at least one of the following features that:

a PRB corresponds to a data selection unit on the same time-domain symbol;
a PRB corresponds to one or more PRS selection units on the same time-domain symbol;
a slot corresponds to a data selection unit in time-domain;
a slot corresponds to one or more PRS selection units in time-domain;
data selection units in a slot are frequency division multiplexed;

PRS selection units in a slot are time division multiplexed and/or frequency division multiplexed;

a data selection unit includes all subcarriers in each of H PRBs, wherein H is a positive integer greater than or equal to 1;

a PRS selection unit includes a portion of the subcarriers in each of B PRBs, wherein B is a positive integer greater than or equal to 1;

signals in a data channel are communicated in one or more data selection units;

a PRS signal is communicated in one or more PRS selection units;

a data selection unit includes D PRS selection units, wherein D is a positive integer greater than or equal to 1;

there is a multiple relationship between frequency-domain resources corresponding to a data selection unit and frequency-domain resources corresponding to a PRS selection unit;

there is a multiple relationship between time-domain resources corresponding to a data selection unit and time-domain resources corresponding to a PRS selection unit;

a number of time-domain symbols corresponding to a data selection unit is equal to a number of time-domain symbols corresponding to G PRS selection units, wherein the numbers of time-domain symbols corresponding to different PRS selection units among the G PRS selection units are the same or different, wherein G is a positive integer greater than 1;

based on parameter signaling information, parameters of the PRS selection unit and parameters of the data selection unit are determined respectively;

the data selection unit is a basic scheduling unit for communicating data;

the PRS selection unit is a basic scheduling unit for communicating PRS.

18. The method according to claim 1 or 9, further comprising:
    determining F categories of data selection units in the data region by the first communication node, wherein F is a positive integer greater than 1.

19. The method according to claim 18, the F categories of data selection units further comprise at least one of the following features that:

    the F categories of data selection units correspond to F categories of slots;
    the F categories of data selection units include different numbers of frequency-domain resource blocks;
    the F categories of data selection units include different numbers of time-domain symbols.

20. The method according to claim 19, the F categories of slots further comprise: a slot with a PRS region and a slot without any PRS region, as included in the F categories of slots.

21. The method according to claim 1 or 18, further comprising one of the following:

    determining, by the first communication node, a category of data selection units corresponding to a slot based on resource condition corresponding to a PRS region included in the slot;
    the category of data selection units is associated with whether the PRS region is configured in the slot.

22. The method according to claim 1, further comprising at least one of the following:

    determining a structure of a slot based on the PRS region by the first communication node;
    determining a structure of a slot based on whether the PRS region is included in the slot by the first communication node;
    determining a structure of a slot by the first communication node, wherein the slot includes the PRS region.

23. The method according to claim 22, wherein the structure of the slot comprises one of the following that:

    the slot includes the PRS region and a feedback channel region;
    the slot includes PRS signal time-domain symbols and not includes data time-domain symbols; and
    the slot includes a control channel region and a PRS region;
    wherein the PRS region includes the PRS signal time-domain symbols.

24. The method according to claim 23, wherein the slot including the PRS region and the feedback channel region comprises at least one of the following that:

    the slot includes PRS signal time-domain symbols and feedback channel time-domain symbols;
    the PRS region and the feedback channel region are located in different time-domain symbols;
    the time-domain symbols in which the PRS region is located are in front of the time-domain symbols in which the feedback channel region is located;
    there is a GAP time-domain symbol and/or a power adjustment AGC time-domain symbol between the time-domain symbols in which the PRS region is located and the time-domain symbols in which the feedback channel region is located;

a first time-domain symbol in the PRS region includes a repetition of a signal on a second time-domain symbol in the PRS signal time-domain symbols;

there is an association relationship between the time-domain symbols in which the PRS region is located and the time-domain symbols in which the feedback channel region is located;

there is an association relationship between a PRS selection unit in the PRS region and a feedback channel in the feedback channel region;

there is an association relationship between a PRS selection unit in the PRS region and a feedback channel selection unit in the feedback channel region.

25. The method according to any one of claims 23 to 24, wherein a feedback channel transmitted in the feedback channel region comprises at least one of the following information: an Acknowledgement ACK information or a Negative Acknowledgement NACK information corresponding to a data channel, a measurement result obtained based on a channel state information reference signal CSI-RS, and positioning measurement information obtained based on PRS.

26. The method according to claim 23, wherein the slot including the control channel region and the PRS region comprises at least one of the following features that:

the control channel region and the PRS region are located in different time-domain symbols;

the control channel region and the PRS region are adjacent, and there is no GAP time-domain symbol and/or AGC time-domain symbol between the control channel region and the PRS region; and

the control channel region and the PRS region corresponds to different PRBs or different PRS selection units or different resource elements REs.

27. The method according to claim 1, the PRS region comprises at least one of the following:

one or more PRS selection units;
one or more second PRS units included in a slot;
one or more PRS selection units included in a slot.

28. The method according to any one of claims 3, 7, 27, wherein the second PRS unit satisfies at least one of the following features that:

a signal transmitted in a first time-domain symbol of each second PRS unit is a repetition of a signal transmitted in a second time-domain symbol;

the first time-domain symbol of each second PRS unit is an AGC time-domain symbol;

there is a gap between two second PRS units, wherein the gap includes one or more time-domain symbols;

a resource occupied by a PRS signal belongs to a second PRS unit;

a number of time-domain symbols occupied by a PRS signal is equal to a number of time-domain symbols corresponding to a second PRS unit;

a second PRS unit includes one or more PRS selection units;

there are at least two categories of second PRS units;

a second PRS unit includes one or more PRS selection units in frequency-domain;

the second PRS unit contains P time-domain symbols, P is an integer greater than 0;

a slot includes one or more second PRS units.

29. The method according to claim 28, wherein the second PRS unit further satisfies the following features that:

different categories of second PRS units of at least two categories of second PRS units correspond to different numbers of time-domain symbols;

each category of the at least two categories of second PRS units corresponds to a PRS pattern respectively, wherein the PRS pattern comprises time-domain symbols and subcarriers occupied by a PRS signal.

30. The method according to any one of claims 8 to 21, wherein the resource comprises one of the following:

a slot, a time-domain symbol in a slot, a set of physical resource blocks, a subcarrier, a selection unit;

wherein the selection unit comprises a PRS selection unit or a data selection unit.

31. The method according to any one of claims 8, 15 to 17, 24, 26 to 28, 30, wherein the PRS selection unit satisfies at least one of the following features that:

a PRS signal occupies one or more PRS selection units;

in the case that the PRS signal occupies a plurality of PRS selection units, the plurality of PRS selection units occupied by the PRS signal correspond to the same time-domain symbol;

a PRS selection unit only corresponds to a PRS signal;

there are multiple categories of PRS selection units, wherein different categories of PRS selection units correspond to at least one of the following parameters differently: a time-domain symbol, a number of REs occupied in a PRB, a number of corresponding frequency-domain resource blocks, and a pattern of PRS signal;

a PRB corresponds to a plurality of PRS selection units in a slot;

a slot corresponds to a plurality of PRS selection units;

a PRS selection unit corresponds to B PRBs and K time-domain symbols;

a PRS selection unit includes I REs in each of the B PRBs on each of the K time-domain symbols;

a PRS selection unit occupies different subcarrier positions on different time-domain symbols in its corresponding K time-domain symbols;

a PRS selection unit occupies a total number of I*K REs in each PRB of the K time-domain symbols, wherein I*K is equal to 12;

the PRS selection unit is a basic unit for scheduling PRS signal;

a PRS selection unit includes a control channel region and a PRS region;

a first time-domain symbol of a PRS selection unit includes a repeat transmission of a signal in a second time-domain symbol in the PRS selection unit;

two categories of PRS selection units in the PRS region, wherein a control channel is transmitted in a first category of PRS selection unit and a PRS signal is transmitted in a second category of PRS selection unit;

wherein B, K are positive integers greater than or equal to 1, and I is an integer or fraction less than 12.

32. The method according to any one of claims 1 to 31, wherein the PRS region corresponds to one of the following:
a carrier frequency configuration structure, a bandwidth part BWP configuration structure, a resource pool configuration structure, a set of configuration parameters in a resource pool.

33. The method according to any one of claims 1 to 31, further comprising:
determining, by the first communication node, at least one of the following parameters corresponding to the PRS region based on a ninth signaling information or a predetermined rule:
a PRS signal resource list, a physical control channel, time-domain parameters, a set of PRBs corresponding to the PRS region, parameters of a PRS selection unit, a number of PRS selection units included in the PRS region, parameters for determining available PRS selection units in the PRS region, and PRS pattern information.

34. The method according to any one of claims 1 to 33, wherein communicating the PRS signal in the PRS region satisfies at least one of the following features that:

a PRS signal occupies one or more PRS selection units in the PRS region;
on a time-domain symbol, a PRS signal occupies a subcarrier every C subcarriers in a set of frequency-domain resource blocks to which the PRS signal corresponds, wherein C is greater than 12 or C belongs to any one of the following parameters {2, 4, 12, 8, 24, 9, 36};
wherein a PRS signal corresponds to a PRS signal resource.

35. The method according to claim 32 or 33, further comprising:
determining, by the first communication node, at least one of the following parameters corresponding to the PRS signal resource based on a tenth signaling information or a predetermined rule:
pattern information of the PRS signal, a number of PRBs occupied by the PRS signal, positions of the PRBs occupied by the PRS signal, time-domain symbol positions occupied by the PRS signal in a slot, a number of time-domain symbols occupied by the PRS signal in a slot, a number of PRS selection units occupied by the PRS signal, positions of the selection units occupied by the PRS signal, transmit power for the PRS signal, and pattern selection information of the PRS signal, wherein the pattern information of the PRS signal comprises RE positions occupied by the PRS signal in a PRB and a subcarrier offset corresponding to a PRS pattern.

36. The method according to claim 33 or 35, further comprising:

communicating the ninth signaling information and/or the tenth signaling information by the first communication node;
wherein the communicating comprises transmitting and/or receiving.

37. The method according to claim 8, wherein determining the available PRS selection units among the set of candidate PRS selection units in the PRS region by the first communication node comprises:

detecting an eleventh signaling information in a control channel detection occasion of a predetermined time window by the first communication node;

determining PRS selection units selected by a second communication node based on the detected eleventh signaling information by the first communication node;

determining unavailable PRS selection units among the set of candidate PRS selection units based on the PRS selection units selected by the second communication node by the first communication node.

**38.** The method according to claim 37, wherein detecting the eleventh signaling information in the predetermined time window by the first communication node comprises at least one of the following:

respectively detecting the eleventh signaling information in each control channel detection occasion of the predetermined window by the first communication node;

respectively detecting the eleventh signaling information in each control channel detection occasion of the predetermined window that satisfies a predetermined feature by the first communication node;

wherein there is a correspondence relationship between the predetermined time window and the set of candidate PRS selection units, and the eleventh signaling information comprises one or more signaling information.

**39.** A method for communicating a positioning reference signal of a communication node, comprising:

determining a structure of positioning reference signal PRS selection units by a first communication node;

determining one or more PRS selection units by the first communication node; and

communicating a PRS signal on the determined one or more PRS selection units by the first communication node and/or communicating a twelfth signaling information by the first communication node, wherein the twelfth signaling information comprises information of the determined one or more PRS selection units;

wherein the communicating comprises transmitting and/or receiving.

**40.** The method according to claim 39, wherein determining the structure of PRS selection units by the first communication node comprises:

determining the structure of the PRS selection units based on at least one of the following parameters by the first communication node:

a number of frequency-domain resource blocks PRBs corresponding to the PRS selection units;

a number of time-domain symbols corresponding to the PRS selection units;

a pattern of the PRS signal corresponding to the PRS selection units; and

a subcarrier position occupied by the PRS selection units in each corresponding time-domain symbol in each of its corresponding resource blocks.

**41.** The method according to claim 39, further comprising at least one of the following:

determining available PRS selection units among a set of candidate PRS selection units based on the structure of the PRS selection units by the first communication node, determining one or more PRS selection units among the determined available PRS selection units by the first communication node, and transmitting a PRS signal on the determined one or more PRS selection units by the first communication node;

the determined one or more PRS selection units including a PRS selection unit on which the first communication node transmits the PRS signal;

the determined one or more PRS selection units including a PRS selection unit reserved by the first communication node;

the determined one or more PRS selection units including a PRS selection unit selected by a second communication node;

receiving the twelfth signaling information by the first communication node, determining the PRS selection unit selected by the second communication node based on the twelfth signaling information by the first communication node, and receiving a PRS signal transmitted by the second communication node on the PRS selection unit selected by the second communication node by the first communication node.

**42.** The method according to claim 41, wherein the determining the available PRS selection units among the set of candidate PRS selection units comprises one of the following:

receiving a thirteenth signaling information by the first communication node, determining PRS selection units selected by the second communication node based on the thirteenth signaling information by the first communication node, and determining unavailable PRS selection units among the candidate PRS selection units based on the PRS selection units selected by the second communication node by the first communication node;

detecting fourteenth signaling information in a predetermined time window by the first communication node, determining a PRS selection unit selected by the second communication node based on the detected fourteenth signaling information by the first communication node, and determining a PRS selection unit unavailable in the candidate PRS selection units based on the PRS selection unit selected by the second communication node by the first communication node.

43. The method according to claim 42, wherein detecting the fourteenth signaling information in a predetermined time window by the first communication node comprises at least one of the following:

respectively detecting the fourteenth signaling information in each control channel detection occasion of the predetermined window by the first communication node;
there is a correspondence relationship between the predetermined time window and the set of candidate PRS selection units, the fourteenth signaling information comprises one or more signaling information;
respectively detecting the fourteenth signaling information in each control channel detection occasion of control channel detection occasions of the predetermined window that satisfies a predetermined feature by the first communication node.

44. The method according to claim 43, wherein the control channel detection occasion satisfies at least one of the following features that:

the control channel detection occasion occurs periodically in the predetermined window;
a set of slots corresponding to the control channel detection occasion is a subset of the set of slots corresponding to the predetermined window;
the control channel detection occasion is located in a predetermined region in the predetermined window.

45. The method according to claim 44, wherein the predetermined region satisfies at least one of the following features that:

the predetermined region belongs to a PRS region;
the predetermined region does not include a data region.

46. The method according to any one of claims 39 to 45, wherein the PRS selection unit satisfies at least one of the following features that:

a PRS signal occupies one or more PRS selection units;
in the case that the PRS signal occupies a plurality of PRS selection units, the plurality of PRS selection units occupied by the PRS signal correspond to the same time-domain symbol;
a PRS selection unit only corresponds to a PRS signal;
there are multiple categories of PRS selection units, wherein different categories of PRS selection units correspond to at least one of the following parameters differently: a time-domain symbol, a number of REs occupied in a PRB, a number of corresponding frequency-domain resource blocks, and a pattern of the PRS signal;
a PRB corresponds to a plurality of PRS selection units in a slot;
a slot corresponds to a plurality of PRS selection units;
a PRS selection unit corresponds to B PRBs and K time-domain symbols;
a PRS selection unit includes I REs in each of the B PRBs on each of the K time-domain symbols;
a PRS selection unit occupies a total number of I*K REs in each PRB of the K time-domain symbols, wherein I*K is equal to 12;
a PRS selection unit occupies different subcarrier positions on different time-domain symbols in its corresponding K time-domain symbols;
a PRS selection unit is a basic unit for scheduling the PRS signal;
a PRS selection unit includes a control channel region and a PRS region;
a first time-domain symbol of a PRS selection unit includes a repeat transmission of a signal in a second time-domain symbol in the PRS selection unit;
two categories of PRS selection units in the PRS region, wherein a control channel is communicated in a first category of PRS selection unit and a PRS signal is communicated in a second category of PRS selection unit;
the PRS selection units and data selection units have different structures;
wherein B, K are integers greater than or equal to 1, and I is an integer or fraction less than 12.

47. The method according to claim 46, wherein the PRS selection units and data selection unit having different structures comprises at least one of the following that:

respectively determining parameters of the PRS selection units and parameters of the data selection units based on signaling information;
a PRB corresponds to a data selection unit on the same time-domain symbol;
a PRB corresponds to one or more PRS selection units on the same time-domain symbol;

a slot corresponds to a data selection unit in time-domain;

a slot corresponds to one or more PRS selection units in time-domain;

data selection units in a slot are frequency division multiplexed;

PRS selection units in a slot are time division multiplexed and/or frequency division multiplexed;

a data selection unit includes all subcarriers in each RPB in H PRBs, H is a positive integer greater than or equal to 1;

a PRS selection unit includes a portion of the time-domain symbols in each of B PRBs, B is a positive integer greater than or equal to 1;

signals in a data channel are communicated in one or more data selection units;

a PRS signal is communicated in one or more PRS selection units;

a data selection unit includes D PRS selection units, wherein D is a positive integer greater than or equal to 1;

there is a multiple relationship between frequency-domain resources corresponding to a data selection unit and frequency-domain resources corresponding to a PRS selection unit;

there is a multiple relationship between a time-domain resource corresponding to a data selection unit and time-domain resources corresponding to a PRS selection unit;

a number of time-domain symbols corresponding to a data selection unit is equal to a number of time-domain symbols corresponding to G PRS selection units, wherein the numbers of time-domain symbols corresponding to different PRS selection units among the G PRS selection units are the same or different, wherein G is a positive integer greater than 1;

the data selection unit is a basic scheduling unit for communicating data;

the PRS selection unit is a basic scheduling unit for communicating PRS.

48. The method according to any one of claims 39 to 47, further comprising: determining a set of candidate PRS selection units based on the communicated signaling information or a predetermined rule by the first communication node.

49. An apparatus for communicating a positioning reference signal of a communication node, comprising:

a determining module for determining a positioning reference signal PRS region; and
a communicating module for communicating a PRS signal in the PRS region;
wherein the communicating comprises transmitting and/or receiving.

50. An apparatus for communicating a positioning reference signal of a communication node, comprising a determining module and a communicating module, the communicating module comprising a first communicating unit and a second communicating unit;

the determining module is used for determining a structure of PRS selection units;
the determining module is further used for determining one or more PRS selection units;
the first communicating unit is used for communicating a PRS signal on the determined one or more PRS selection units,
and/or the second communicating unit is configured for communicating a twelfth signaling information, wherein the twelfth signaling information comprises information of the determined one or more PRS selection units;
wherein the communicating comprises transmitting and/or receiving.

51. A communication node, comprising a processor, which when executing computer program implements the method of communicating the positioning signal of the communication node as claimed in any of claims 1-38, or the method of communicating the positioning signal of the communication node as claimed in any of claims 39-48.

52. A readable and writable storage medium, wherein the readable and writable storage medium has computer program stored thereon, which when executed by a processor implements the method of communicating the positioning signal of the communication node as claimed in any of claims 1-38, or the method of communicating the positioning signal of the communication node as claimed in any of claims 39-48.

Determine a positioning measurement reference signal
PRS region by a first communication node
S101

Communicate a PRS signal in the PRS region
by the first communication node
S102

## FIG.1

SL-PHY-MAC-RLC-config
(Sidelink physical layer-MAC layer-RLC layer configuration structure)

frequency
(Carrier frequency
configuration structure)

BWP
(Bandwidth part
configuration structure)

| 16 Rx pools | 8 Tx pools for mode1 | 8 Tx pools for mode2 | 1 Tx pools for Exception |
|---|---|---|---|
| (16 receiving resource pools) | (8 transmitting resource pools for mode 1) | (8 transmitting resource pools for mode 2) | (1 transmitting resource pool for exception) |

One pool:PDSCH,PSCCH,PSFCH,subchannel,sensing,PTRS,
TDD-configuration,znoe,power,filter,MCS
(One resource pool: Physical Sidelink Shared Channel, Physical Sidelink Control Channel, Physical
Sidelink Feedback Channel, data subchannel, information of terminal selection resource, Phase
Tracking Reference Signal, time slot structure configuration information, region information,
power information, filter information, Modulation and Coding Scheme information)

## FIG.2

FIG.3

Frequency
domain

Frequency for data
(Frequency-domain
resource occupied
by data)

Frequency for PRS
(Frequency-domain
resource occupied by PRS)

FIG.4

Frequency
domain

Frequency for data
(Frequency-domain resource
occupied by data)

Frequency for PRS
(Frequency-domain
resource occupied by PRS)

FIG.5

SL-PHY-MAC-RLC-config
(Sidelink physical layer-MAC layer-RLC
layer configuration structure)

Frequency For data
(Carrier frequency
configuration structure)

BWP for data
(Bandwidth part
configuration structure
for data region)

BWP for PRS
(Bandwidth part
configuration structure
for PRS region)

16 Rx pools
(Up to 16
receiving
resource pools)

8 Tx pools
for mode1
(Up to 8 transmitting
resource pools
for mode 1)

8 Tx pools
for mode2
(Up to 8 transmitting
resource pools
for mode 2)

1 Tx pools for Exception
(Up to 1 transmitting
resource pool
for exception)

M Rx pools
(Up to M
receiving
resource pools)

N Tx pools
for mode1
(Up to N transmitting
resource pools
for mode 1)

N Tx pools
for mode2
(Up to N transmitting
resource pools
for mode 2)

L Tx pools for Exception
(Up to L transmitting
resource pools
for exception)

One pool:PDSCH,PSCCH,PSFCH,subchannel,sensing,PTRS,
TDD-configuration,znoe,power,filter,MCS
(One resource pool: Physical Sidelink Shared Channel, Physical Sidelink Control
Channel, Physical Sidelink Feedback Channel, data subchannel, information of terminal
selection resource, Phase Tracking Reference Signal, time slot structure configuration
information, region information, power information, filter information,
Modulation and Coding Scheme information)

One pool:PRS resource list,PSCCH
(One resource pool: PRS signal resource list, Physical Sidelink Control Channel)

FIG.6

FIG.7

SL-PHY-MAC-RLC-config
(Sidelink physical layer-MAC layer-RLC
layer configuration structure)

Frequency For data
(Carrier frequency
configuration structure
for data region)

BWP
(Bandwidth part configuration structure)

| 16 Rx pools (16 receiving resource pools) | 8 Tx pools (8 transmitting resource pools for mode 1) | 8 Tx pools for mode2 (8 transmitting resource pools for mode 2) | 1 Tx pools for Exception (1 transmitting resource pool for exception) | M Rx pools (M receiving resource pools) | N Tx pools for mode1 (N transmitting resource pools for mode 1) | N Tx pools for mode2 (N transmitting resource pools for mode 2) | L Tx pools for Exception (L transmitting resource pools for exception) |

One pool:PDSCH,PSCCH,PSFCH,subchannel,sensing,PTRS,
TDD-configuration,znoe,power,filter,MCS
(One resource pool: Physical Sidelink Shared Channel, Physical Sidelink Control
Channel, Physical Sidelink Feedback Channel, data subchannel, information of
terminal selection resource, Phase Tracking Reference Signal, time slot structure
configuration information, region information, power information, filter information,
Modulation and Coding Scheme information)

One pool:PRS resource list,PSCCH
(One resource pool: PRS signal resource list, Physical Sidelink Control Channel)

FIG.8

SL-PHY-MAC-RLC-config
(Sidelink physical layer-MAC layer-RLC
layer configuration structure)

Frequency For data
(Carrier frequency
configuration structure)

BWP
(Bandwidth part configuration structure)

| 16 Rx pools (16 receiving resource pools ) | 8 Tx pools for mode1 (8 transmitting resource pools for mode 1) | 8 Tx pools for mode2 (8 transmitting resource pools for mode 2) | 1 Tx pools for Exception (1 transmitting resource pool for exception) |

One pool:PDSCH,PSCCH,PSFCH,subchannel,sensing,PTRS,
TDD-configuration,znoe,power,filter,MCS
(One resource pool: Physical Sidelink Shared Channel, Physical Sidelink Control Channel, Physical Sidelink Feedback Channel, data subchannel, information of terminal selection resource, Phase Tracking Reference Signal, time slot structure configuration information, region information, power information, filter information, Modulation and Coding Scheme information)

PRS parameter: PRS resource list, PSCCH, time domain parameter, PRS sensing, PRS pattern
(Parameters of PRS: PRS resource list, Physical Sidelink Control Channel, time-domain parameters, PRS sensing parameters, PRS pattern information)

**FIG.9**

| PRS | Data (data) | Data (data) | PRS | Data (data) | Data (data) | ...... | PRS | Data (data) | Data (data) |

One slot

One period

**FIG.10**

FIG.11

FIG.12

FIG.13

FIG.14

FIG.15

**FIG.16**

**FIG.17**

**FIG.18**

**FIG.19**

**FIG.20**

FIG.21

FIG.22

FIG.23

FIG.24

FIG.25

FIG.26

EP 4 398 660 A1

| AGC | PSCCH+PRS | PSCCH+PRS | PSCCH+PRS | PSCCH+PRS | PSCCH+PRS | PRS | PRS | PRS | PRS | PRS | PRS | PRS | GAP |
|------|-----------|-----------|-----------|-----------|-----------|-----|-----|-----|-----|-----|-----|-----|-----|

One OFDM symbol

One slot

# FIG.27

| PRS | PRS | PRS | PRS | PRS | PRS | PRS | PRS | PRS | PRS | PRS | PRS | PRS | PRS |
|-----|-----|-----|-----|-----|-----|-----|-----|-----|-----|-----|-----|-----|-----|

One OFDM symbol

One slot

# FIG.28

| PRS-AGC | PRS | PRS | PRS | PRS | PRS-AGC | PRS | PRS | PRS-AGC | PRS | PRS | PRS-AGC | PRS | PRS |
|---------|-----|-----|-----|-----|---------|-----|-----|---------|-----|-----|---------|-----|-----|

one second PRS unit | one second PRS unit | one second PRS unit | one second PRS unit

One OFDM symbol

One slot

# FIG.29

| PSCCH-AGC | PSCCH | PRS | PRS | PRS | PRS | PSCCH-AGC | PSCCH | PRS | PRS | PSCCH-AGC | PSCCH | PRS | PRS |
|-----------|-------|-----|-----|-----|-----|-----------|-------|-----|-----|-----------|-------|-----|-----|

one second PRS unit | one second PRS unit | one second PRS unit

One OFDM symbol

One slot

# FIG.30

FIG.31

Determine a structure of PRS selection units
by a first communication node — S3001

Determine one or more PRS selection units
by the first communication node — S3002

Communicate a PRS signal on the determined
one or more PRS selection units or communicate signaling
information by the first communication node — S3003

# FIG.32

Apparatus for communicating
a positioning reference signal
of a communication node

Determination module — 3101

Communication module — 3102

# FIG.33

Apparatus for communicating
a positioning reference signal
of a communication node

Determination module — 3201

Communication module — 3202

# FIG.34

3301

Processor

Memory — 3302

# FIG.35

## INTERNATIONAL SEARCH REPORT

| International application No. |
| --- |
| **PCT/CN2022/116158** |

**A. CLASSIFICATION OF SUBJECT MATTER**

H04W 64/00(2009.01)i; H04W 76/14(2018.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 定位参考信号, 定位, 位置, 传输, 发送, 接收, 配置, 资源, 时隙, 时域符号, 周期, 参数, 物理资源块, 频域, PRS, position reference signal, location, transmit, receive, configuration, resource, slot, symbol, period, parameter, PRB, frequency

**C. DOCUMENTS CONSIDERED TO BE RELEVANT**

| Category* | Citation of document, with indication, where appropriate, of the relevant passages | Relevant to claim No. |
| --- | --- | --- |
| X | CN 110535578 A (TELECOMMUNICATIONS TECHNOLOGY RESEARCH INSTITUTE CO., LTD.) 03 December 2019 (2019-12-03)<br>description, paragraphs [0111]-[0276] | 1-52 |
| X | CN 113055136 A (DATANG MOBILE COMMUNICATIONS EQUIPMENT CO., LTD.) 29 June 2021 (2021-06-29)<br>description, paragraphs [0106]-[0407] | 1-52 |
| X | WO 2021022555 A1 (NOKIA SHANGHAI BELL CO., LTD. et al.) 11 February 2021 (2021-02-11)<br>description, paragraphs [0042]-[00139] | 1-52 |
| X | WO 2020001380 A1 (VIVO MOBILE COMMUNICATION CO., LTD.) 02 January 2020 (2020-01-02)<br>description, page 4, line 15-page 23, line 7 | 1-52 |
| X | ZTE et al. "Discussion on NR DL PRS"<br>*3GPP TSG RAN WG1 Meeting #97 R1-1906424*, 03 May 2019 (2019-05-03),<br>sections 2 and 3 | 1-52 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 November 2022** | **25 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/116158**

| Patent document cited in search report | | | Publication date (day/month/year) | Patent family member(s) | Publication date (day/month/year) |
|---|---|---|---|---|---|
| CN | 110535578 | A | 03 December 2019 | None | |
| CN | 113055136 | A | 29 June 2021 | None | |
| WO | 2021022555 | A1 | 11 February 2021 | None | |
| WO | 2020001380 | A1 | 02 January 2020 | None | |

Form PCT/ISA/210 (patent family annex) (January 2015)